(19) Europäisches Patentamt
European Patent Office
Office européen des brevets

(11) **EP 4 510 203 A1**

(12) **EUROPEAN PATENT APPLICATION**

(43) Date of publication:
**19.02.2025 Bulletin 2025/08**

(21) Application number: **24156680.1**

(22) Date of filing: **08.02.2024**

(51) International Patent Classification (IPC):
$H01M\ 4/04^{(2006.01)}$    $H01M\ 4/136^{(2010.01)}$
$H01M\ 4/36^{(2006.01)}$    $H01M\ 4/58^{(2010.01)}$
$H01M\ 4/62^{(2006.01)}$    $H01M\ 10/0525^{(2010.01)}$
$H01M\ 10/0562^{(2010.01)}$    $H01M\ 4/02^{(2006.01)}$

(52) Cooperative Patent Classification (CPC):
**H01M 10/0562; H01M 4/04; H01M 4/136;**
**H01M 4/364; H01M 4/58; H01M 4/5815;**
**H01M 4/582; H01M 4/62; H01M 4/624;**
**H01M 4/625; H01M 10/0525;** H01M 2004/021;
H01M 2004/028; H01M 2300/0068

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **17.08.2023 KR 20230107862**

(71) Applicant: **Samsung SDI Co., Ltd.**
**Yongin-si, Gyeonggi-do 17084 (KR)**

(72) Inventors:
• **Lim, Hyungsub**
**17084 Yongin-si, Gyeonggi-do (KR)**
• **Son, Inhyuk**
**17084 Yongin-si, Gyeonggi-do (KR)**
• **Jo, Sungnim**
**17084 Yongin-si, Gyeonggi-do (KR)**
• **Shim, Kyueun**
**17084 Yongin-si, Gyeonggi-do (KR)**
• **Park, Taehyun**
**17084 Yongin-si, Gyeonggi-do (KR)**
• **Lee, Jieun**
**17084 Yongin-si, Gyeonggi-do (KR)**

(74) Representative: **Michalski Hüttermann & Partner**
**Patentanwälte mbB**
**Kaistraße 16A**
**40221 Düsseldorf (DE)**

(54) **SOLID SECONDARY BATTERY, AND METHOD OF PREPARING THE SAME**

(57) A solid secondary battery may include a cathode layer, an anode layer, and a solid electrolyte layer, wherein the cathode layer includes a cathode current collector and a cathode active material layer on one side or two sides of the cathode current collector, the cathode active material layer includes a composite cathode active material, the composite cathode active material includes a composite of i) $M_2S$, ii) an alkali metal salt, iii) an inorganic electronically-conductive structure, and iv) a two-dimensional carbonaceous structure or a fibrous carbonaceous material having an aspect ratio of 2 or more, wherein M is an alkali metal, and the alkali metal is Li or Na, wherein the inorganic electronically-conductive structure has an electronic conductivity of $10^{-3}$ S/cm or more, the composite includes a solid solution of the $M_2S$ and the alkali metal salt, and the two-dimensional carbonaceous structure is graphene, graphene oxide, or a combination thereof.

FIG. 2

**Description**

**CROSS-REFERENCES TO RELATED APPLICATION**

The present application claims priority to and the benefit of Korean Patent Application No. 10-2023-0107862, filed on August 17, 2023, in the Korean Intellectual Property Office, the entire content of which is incorporated herein by reference.

**BACKGROUND**

**1. Field**

One or more aspects of embodiments of the present disclosure relate to a solid secondary battery and a method of preparing the same.

**2. Description of the Related Art**

In line with recent requirements or desires in the industry, batteries with relatively high energy density and stability (safety) are actively being developed. For example, lithium batteries are utilized for one or more suitable purposes in information devices, communication devices, vehicles, and/or the like. Also, automobile (battery) safety is especially important as it is intimately intertwined and related to people's activities.

Lithium batteries employing liquid electrolytes may be more susceptible to a fire and/or explosion due to a short circuit. Solid secondary batteries employing solid electrolytes in place of liquid electrolytes are proposed as a possible alternative. Compared to liquid electrolytes, solid electrolytes may be less likely to cause a fire.

Therefore, by employing solid electrolytes instead of liquid electrolytes, a solid secondary battery may reduce a risk of fire and/or explosion. As such, a solid battery including a solid electrolyte may provide improved safety.

**SUMMARY**

One or more aspects of embodiments of the present disclosure are directed toward a solid secondary battery which has improved initial efficiency, relatively high-rate capability and/or volumetric energy density, by including a cathode with an improved electron conduction network.

One or more aspects of the present embodiments are directed toward a method of preparing the solid secondary battery.

Additional aspects will be set forth in part in the description which follows and, in part, will be apparent from the description, or may be learned by practice of the presented embodiments of the present disclosure.

According one or more embodiments, a solid secondary battery includes:

a cathode layer, an anode layer, and a solid electrolyte layer provided between the cathode layer and the anode layer, wherein the cathode layer includes a cathode current collector, and a cathode active material layer provided on at least one side of the cathode current collector, wherein the cathode active material layer includes a composite cathode active material, wherein the composite cathode active material includes a composite of i) $M_2S$, M being Li or Na, ii) an alkali metal salt, iii) an inorganic electronically-conductive structure, and iv) a two-dimensional carbonaceous structure and/or a fibrous carbonaceous material, the fibrous carbonaceous material having an aspect ratio of 2 or more, and the inorganic electronically-conductive structure has an electronic conductivity of $10^{-3}$ S/cm or more, wherein the composite cathode active material includes a solid solution of the $M_2S$ and the alkali metal salt, and the two-dimensional carbonaceous structure is graphene, graphene oxide, or a combination thereof.

With respect to 100 parts by weight of the composite, about 10 parts by weight to about 80 parts by weight of the $M_2S$, about 1 part by weight to about 40 parts by weight of the alkali metal salt, and about 1 part by weight to about 20 parts by weight of the inorganic electronically-conductive structure may be included.

The size of the $M_2S$ may be identical to or smaller than the size of the alkali metal salt, and the size of the inorganic electronically-conductive structure may be larger than the size of lithium sulfide and the alkali metal salt, and the particle sizes of the inorganic electronically-conductive structure, the alkali metal salt, and the $M_2S$ may gradually decrease in order of: the inorganic electronically-conductive structure > the alkali metal salt > the $M_2S$.

The cathode active material layer may further include a solid electrolyte, and the solid electrolyte may include a sulfide-based solid electrolyte, an oxide-based solid electrolyte, a polymer solid electrolyte, or a combination thereof, wherein the amount of the solid electrolyte with respect to 100 parts by weight of the cathode active material layer may be about 10 parts by weight to about 60 parts by weight.

The anode layer may include an anode current collector and a first anode active material layer provided on the anode current collector.

According one or more embodiments, a method of preparing a solid secondary battery includes performing first milling on a composition including $M_2S$, an alkali metal salt, and an inorganic electronically-conductive structure, obtaining a composite by adding a composition including a fibrous carbonaceous material or a two-dimensional carbonaceous structure to a product of the first milling, and performing second milling, preparing a composition by adding a binder to the composite and then mixing the same, and preparing a cathode by utilizing the composition, preparing an anode, and applying a solid electrolyte between the cathode and the anode.

## BRIEF DESCRIPTION OF THE DRAWINGS

The above and other aspects, features, and advantages of certain embodiments of the present disclosure will be more apparent from the following description taken in conjunction with the accompanying drawings, in which:

FIG. 1 is a schematic diagram of a structure of a cathode active material layer according to one or more embodiments; and

FIGS. 2-7 are each a cross-sectional view of a solid secondary battery according to one or more embodiments.

## DETAILED DESCRIPTION

Reference will now be made in more detail to embodiments, examples of which are illustrated in the accompanying drawings, wherein like reference numerals refer to like elements throughout, and duplicative descriptions thereof may not be provided. In this regard, the present embodiments may have different forms and should not be construed as being limited to the descriptions set forth herein. Accordingly, the embodiments are merely described, by referring to the drawings, to explain aspects of the present description.

As utilized herein, the term "and/or" includes any and all combinations of one or more of the associated listed items. Expressions such as "at least one of," "one of", and "selected from", when preceding a list of elements, modify the entire list of elements and do not modify the individual elements of the list. For example, "at least one selected from among a, b and c", "at least one of a, b or c", and "at least one of a, b and/or c" may indicate only a, only b, only c, both (e.g., simultaneously) a and b, both (e.g., simultaneously) a and c, both (e.g., simultaneously) b and c, all of a, b, and c, or variations thereof.

Unless otherwise defined, all terms (including technical and scientific terms) utilized herein have the same meaning as commonly understood by one of ordinary skill in the art to which the present disclosure belongs. It will be further understood that terms, such as those defined in commonly utilized dictionaries, should be interpreted as having a meaning that is consistent with their meaning in the context of the specification and the relevant art and should not be interpreted in an idealized sense or an overly formal sense unless expressly so defined herein.

Embodiments are described herein with reference to cross sectional illustrations that are schematic illustrations of idealized embodiments. As such, variations from the illustrated shapes as a result, for example, of manufacturing techniques and/or tolerances, are to be expected. Thus, embodiments described herein should not be construed as limited to the particular shapes of regions as illustrated herein but are to include deviations in shapes that result, for example, from manufacturing. For example, a region illustrated or described as flat may, typically, have rough and/or nonlinear features. Moreover, angles that are illustrated as being sharp may be rounded. Thus, the regions illustrated in the drawings are schematic in nature and their shapes are not intended to illustrate the precise shape of a region and are not intended to limit the scope of the present claims.

These present disclosure may be embodied in many different forms and should not be construed as limited to the example embodiments set forth herein. Rather, these example embodiments are provided so that this disclosure will be thorough and complete, and will fully convey the scope of the present disclosure to those skilled in the art. In the drawings, like numbers refer to like elements throughout, and duplicative descriptions thereof may not be provided.

It will also be understood that when an element is referred to as being "on" or "over" another element, it can be directly on the other element (e.g., without any intervening elements therebetween) or intervening elements may also be present. In contrast, when an element is referred to as being "directly on" or "directly over" another element, there are no intervening elements present.

It will be understood that, although the terms first, second, third, etc. may be utilized herein to describe one or more suitable elements, components, regions, layers, and/or sections, these elements, components, regions, layers, and/or sections should not be limited by these terms. These terms are only utilized to distinguish one element, component, region, layer, or section, from another element, component, region, layer, or section. For example, a first element, component, region, layer, or section could be termed a second element, component, region, layer, or section, without departing from the teachings of the present disclosure.

The terminology utilized herein is for the purpose of describing particular embodiments only and is not intended to be limiting of the present disclosure. As utilized herein, the singular forms "a", "an" and "the" are intended to include the plural forms as well including "at least one", unless the context clearly indicates otherwise. The term "at least one" should not be interpreted as being limited to a singular form. As utilized herein, the term "and/or" includes any and all combinations of one or more of the associated listed items. It will be further understood that the terms "comprises" and/or "comprising," or "includes" and/or "including" when utilized in this specification, specify the presence of stated features, regions, integers, steps, operations, elements, and/or components, but do not preclude the presence or addition of one or more other features, regions, integers, steps, operations, elements, components, and/or groups thereof. Further, the use of "may" when describing embodiments of the present disclosure refers to "one or more embodiments of the present disclosure".

Furthermore, spatially relative terms, such as "lower", "bottom", or "" and "upper", "top", or "above" may be utilized herein to conveniently describe one element or feature's relationship to another element or feature. It will be understood that spatially relative terms are intended to encompass different orientations of the device while the device is in utilize or operated, in addition to the orientation depicted in the drawings. For example, if the device in one of the drawings is turned over, elements described as being on the "lower" or "bottom" side of other elements would then be oriented on "upper" or "top" sides of the other elements. Therefore, example term "lower" can therefore, encompasses both an orientation of "lower" and "upper". The device may be placed in other orientations (may be rotated by 90 degrees or in a different direction), and spatially relative terms utilized herein may be interpreted accordingly.

"Group" refers to a group in the Periodic Table of Elements of the Elements according to the 1-18 Group numbering system by the International Union of Pure and Applied Chemistry ("IUPAC"). That is, "Group" refers to a group of the periodic table of the elements according to the International Union of Pure and Applied Chemistry ("IUPAC") Groups 1-18 group classification system.

The term "particle size" or "particle diameter" as utilized herein refers to an average particle diameter when the particle is spherical, and refers to an average major axis length when the particle is non-spherical. The particle diameter may be measured by a suitable technique, e.g., utilizing a particle size analyzer (PSA). The term "particle size" or "particle diameter" as utilized herein refers to, for example, an average particle diameter. The term "average particle diameter" as utilized herein refers to, for example, a median particle diameter (D50).

D50 may refer to a particle size corresponding to a cumulative 50 vol% as calculated from the side of particles with the smallest particle size in a particle size distribution as measured by, for example, a laser diffraction method.

D90 may refer to a particle size corresponding to a cumulative 90 vol% as calculated from the side of particles with the smallest particle size in a particle size distribution as measured by, for example, a laser diffraction method.

D10 may refer to a particle size corresponding to a cumulative 10 vol% as calculated from the side of particles with the smallest particle size in a particle size distribution as measured by, for example, a laser diffraction method.

The term "length" and "thickness" as utilized herein refers to, for example, an average length and an average thickness, respectively. The "length" and "thickness" measured utilizing software from a scanning electron microscope image.

As used herein, the terms "substantially", "about", and similar terms are used as terms of approximation and not as terms of degree, and are intended to account for the inherent deviations in measured or calculated values that would be recognized by those of ordinary skill in the art. "About" or "approximately," as used herein, is inclusive of the stated value and means within an acceptable range of deviation for the particular value as determined by one of ordinary skill in the art, considering the measurement in question and the error associated with measurement of the particular quantity (i.e., the limitations of the measurement system). For example, "about" may mean within one or more standard deviations, or within $\pm$ 30%, 20%, 10%, 5% of the stated value.

Any numerical range recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

As utilized herein, the term "metal" refers to both metals and metalloids such as silicon and/or germanium, in an elemental or ionic state.

As utilized herein, the term "alloy" refers to a mixture of two or more metals.

As utilized herein, the term "electrode active material" refers to an electrode material capable of undergoing lithiation and delithiation.

As utilized herein, the term "cathode active material" refers to a cathode material capable of undergoing lithiation and delithiation.

As utilized herein, the term "anode active material" refers to an anode material capable of undergoing lithiation and delithiation.

As utilized herein, the terms "lithiation" and "to lithiate" refer to a process of adding lithium to an electrode active material.

As utilized herein, the terms "delithiation" and "to delithiate" refer to a process of removing lithium from an electrode active material.

As utilized herein, the terms "charging" and "to charge" refer to a process of providing electrochemical energy to a battery.

As utilized herein, the terms "discharging" and "to discharge" refer to a process of removing electrochemical energy from a battery.

As utilized herein, the terms "positive electrode" and "cathode" refer to an electrode at which electrochemical reduction and lithiation take place during a discharging process.

As utilized herein, the terms "negative electrode" and "anode" refer to an electrode at which electrochemical oxidation and delithiation take place during a discharging process.

While example embodiments are described herein, there may be alternatives, modifications, variations, improvements, and substantial equivalents of the examples disclosed herein, including those that are presently unforeseen or unappreciated, that may arise from applicants or those skilled in the art. Accordingly, the appended claims as filed and as they can be amended are intended to embrace all such alternatives, modifications, variations, improvements and substantial equivalents.

Hereinbelow, a composite cathode active material according to embodiments, a cathode including the same, and a solid secondary battery will be described in greater detail.

## Composite Cathode Active Material

A composite cathode active material according to embodiments may include: a composite of i) $M_2S$, ii) an alkali metal salt, iii) an inorganic electronically-conductive structure, and iv) a two-dimensional carbonaceous structure or a fibrous carbonaceous material having an aspect ratio of 2 or more, wherein M is an alkali metal, the alkali metal is Li or Na, the inorganic electronically-conductive structure has an electronic conductivity of $10^{-3}$ S/cm or more, the composite includes a solid solution of the $M_2S$ and the alkali metal salt, and the two-dimensional carbonaceous structure is graphene, graphene oxide, or a combination thereof.

The carbon nanostructure may be at least one selected from a one-dimensional (1D) carbon nanostructure and a two-dimensional (2D) carbon nanostructure. The term "1D carbon nanostructure" used herein refers to a carbon nanostructure having one dimension significantly larger than the other two dimensions, e.g., a carbon nanostructure in which the length in one dimension is significantly greater than the combined lengths of the other dimensions. For example, the 1D carbon nanostructure may be at least one selected from a carbon nanotube, a carbon nanowire, a carbon nanofiber, a carbon nanobelt, and a carbon nanorod, but is not limited thereto. The 1D carbon nanostructure may be any suitable 1D carbon nanostructure, including those available in the art. For example, the carbon nanotube may include a single-walled carbon nanotube (SWCNT) and/or a multi-walled carbon nanotube (MWCNT), but is not limited thereto. Any suitable carbon nanotube available in the art may be used as the 1D carbon nanostructure.

The term "2D carbon nanostructure" used herein refers to a carbon nanostructure with two dimensions significantly larger than the other one dimension, e.g., a carbon nanostructure in which the combined area defined by two dimensions is significantly larger than a thickness. For example, the 2D carbon nanostructure may be at least one selected from graphene oxide, reduced graphene oxide, a graphene nanoplate, and a carbon nanosheet, but is not limited thereto. The 2D carbon nanostructure may be any suitable 2D carbon nanostructure known in the art.

The term "inorganic electronically-conductive structure" refers to an inorganic structure with electronic conductivity but little ionic conductivity, and has a zero-dimensional, one-dimensional, two-dimensional, three-dimensional, or combination form, and its composition is as described in the detailed description. Here, the 0-dimensional shape has a particle shape, the 1-dimensional shape has a fiber shape, and the 2-dimensional shape has a plate-shaped shape.

The term "solid solution" is different from a mixture of two or more chemical species and represents a homogeneous crystalline phase containing two or more chemical species.

The fibrous carbonaceous material may be defined by a length and a diameter, and the aspect ratio of the length to the diameter may be 2 or more, 3 or more, 5 or more, for example, 10 or more. Further, the fibrous carbonaceous material may have a length of about 1 $\mu$m to about 50 $\mu$m, and a diameter of about 10 nm to about 10 $\mu$m. Also, the term "diameter" as utilized herein refers to an average circle diameter when the material's cross-section is circular, and refers to an average major axis length when the material's cross-section is non-circular.

For example, the fibrous carbonaceous material may include carbon nanofibers.

Because the fibrous carbonaceous material has a length and diameter in the above ranges, a conductive network may be relatively easily or suitably formed inside the cathode. A cross-section of the fibrous carbonaceous material may include a shape of a polygon, such as a circle, a triangle, and/or a rectangle.

In some embodiments, utilizing the composite cathode active material may ensure a further elongated ion conduction path in the cathode active material layer. If charging and discharging a solid secondary battery, disconnection of ion conduction paths, due to volume changes of cathode active materials in the cathode active material layers, may be more effectively or suitably inhibited. Consequently, the solid secondary battery may have improved initial efficiency, discharge capacity, high-rate capability, and/or lifespan characteristics.

Further, utilizing the composite may improve the uniformity of ion conduction paths in the cathode active material layer. In some embodiments, the pressure required during the manufacturing of a solid secondary battery may be reduced. In some embodiments, even with reduced pressure, a solid secondary battery having excellent or suitable ion conduction path may be realized. In some embodiments, formation of a local overvoltage inside the cathode active material layers during the charging and discharging processes of a solid secondary battery may be effectively prevented or reduced.

The carbon nanofibers according to the present embodiments may be controlled or selected such that through doping with nitrogen, fluorine, and/or the like, its conductivity increases and side reactions between the cathode active materials and the sulfide-based solid electrolyte may be reduced.

Using the composite containing the fibrous carbonaceous material may enable the preparation of a cathode that can form a thick film, by mitigating or reducing the brittleness of the cathode. As a result, a solid secondary battery having increased energy density may be prepared. Furthermore, due to including the fibrous carbonaceous material, volume changes of the cathode active materials during charging and discharging may be distributed over the entire length of the fibrous carbonaceous material and accommodated, and therefore, for example, volume changes of the cathode active materials may be more effectively or suitably accommodated compared to a carbonaceous material with a spherical particulate form. Consequently, disconnection between the cathode active materials and the solid electrolyte due to volume changes of the cathode active materials within the cathode active material layers may be inhibited or reduced, and substantial uniformity of constitutive components within the cathode active material layers may improve. As a result, the cycling performance of the all-solid secondary battery may improve.

As utilized herein, the term "thick film" refers to a film having a cathode loading level of more than 8 mg/cm$^2$, for example, 9 mg/cm$^2$ or more, 10 mg/cm$^2$ or more, about 10 mg/cm$^2$ to about 60 mg/cm$^2$, or about 10 mg/cm$^2$ to about 50 mg/cm$^2$.

The composite may not have a cluster form, but a uniformly (or a substantially uniformly) distributed state with constitutive components of the composite being fine particles.

For example, the fibrous carbonaceous material may have an aspect ratio of 2 or more, 3 or more, 4 or more, 5 or more, 10 or more, or 20 or more. For example, the fibrous carbonaceous material may have an aspect ratio of about 2 to about 30, about 3 to about 30, about 4 to about 30, about 5 to about 30, about 10 to about 30, or about 20 to about 30. For example, the fibrous carbonaceous material may have an aspect ratio of about 2 to about 30, about 2 to about 20, about 2 to about 10, about 2 to about 8, about 2 to about 5, or about 2 to about 4. With the fibrous carbonaceous material having an aspect ratio in the above ranges, the global electronic conductivity of the composite may improve, and local irregularities in electronic conductivity within the composite may be further mitigated or reduced.

The fibrous carbonaceous material may have, for example, a rod-like structure, a tube-like structure, a needle-like structure, a wire-like structure, or a combination thereof. However, the fibrous carbonaceous material is not necessarily limited to the aforementioned forms and may be any suitable carbonaceous material available in the art that has a fibrous structure. Because the fibrous carbonaceous material has a rod-like structure, a tubular structure, a needle-like structure, a wire-like structure, and/or the like, inside a solid secondary battery including the fibrous carbonaceous material, ion conduction paths may be elongated, and volume changes of cathode active materials during charging and discharging of the solid secondary battery may be more effectively or suitably accommodated. Further, even with such volume changes of the cathode active materials, the ion conduction paths inside the solid secondary battery may be maintained. As a result, degradation of the solid secondary battery may be inhibited or reduced, and the cycling performance of the solid secondary battery may improve.

The inorganic electronically-conductive structure may have an electronic conductivity of $1 \times 10^{-3}$ S/cm or more, or $1 \times 10^{-2}$ S/cm or more. Electronic conductivity may be measured, for example, utilizing electrochemical impedance spectroscopy, a direct current (DC) polarization method, and/or the like. Because the composite containing the inorganic electronically-conductive structure has an electronic conductivity in any of the above ranges, the composite cathode active material including the composite may have reduced internal resistance. A solid secondary battery including the composite cathode active material may have improved initial efficiency, electrode energy density, and lifespan characteristics.

Because the inorganic electronically-conductive structure has a relatively small particle size and is uniformly (or substantially uniformly) dispersed in the composite, the inorganic electronically-conductive structure may be advantageous or suitable for conductive network formation. The inorganic electronically-conductive structure may have a zero-dimensional structure, one-dimensional structure, a two-dimensional structure, a three-dimensional structure, or a combination thereof.

Examples of the zero-dimensional structure may include a particulate form, examples of the one-dimensional structure may include a fiber form, and examples of the two-dimensional structure may include a plate form. If a cathode and a solid secondary battery are prepared utilizing a composite that utilizes the inorganic electronically-conductive structure according to the present embodiments, improvement of initial efficiency (e.g., specific capacity) may be achieved at least in part due to reduced side reactions with solid electrolyte. The side reactions include, for example, reactions between the solid electrolyte and hydroxyl groups ($H_2O$) in the carbon layer of carbon nanofibers (CNFs) included in the cathode, and/or reactions between carbons and lithium polysulfides ($Li_2S_4 < Li_2S_6$), which may lead to an increase in resistance.

Increasing the amount of the inorganic electronically-conductive structure in the composite may lead to increased electronic (electron) conductivity, but to decreased ionic (ion) conductivity as well. Therefore, the domain size of two-dimensional carbonaceous structures, e.g., graphene, may become important. If graphene is utilized as the two-dimensional carbonaceous structures, the domain size of graphene may be controlled or selected utilizing the thickness of the graphene.

The inorganic electronically-conductive structure may have a length (e.g., average length) of about 1 $\mu$m to about 50 $\mu$m, and a thickness (e.g., average thickness) of about 0.01 $\mu$m to about 10 $\mu$m. By utilizing the composite that uses two-dimensional carbon nanostructures having a length and thickness in the above ranges, it may be possible to prepare a solid secondary battery that exhibits improved lifespan characteristics by improving the electronic conductivity network inside the cathode. In some embodiments, strengthening the electronically conductive network may reduce the amount of conductive material in the cathode, and thus improve the energy density in the electrode. Furthermore, because the amount of lithium sulfide relatively increases as the amount of conductive materials in cathode decreases, initial efficiency may improve.

The inorganic electronically-conductive structure may be any suitable material that has a two-dimensional structure, has a chalcogenide material, and has electronic conductivity.

The inorganic electronically-conductive structure may have a form of a zero-dimensional structure, a form of a one-dimensional structure, or a form of a two-dimensional structure. For example, the one-dimensional structure may be a fiber form, and for example, the two-dimensional structure may have a plate form. By utilizing an inorganic electronically-conductive structure having a one-dimensional structure, a cathode can be formed as a thick film and a cathode with improved electrode stability may be obtained, and utilizing an inorganic electronically-conductive structure having a two-dimensional structure may improve the effect of inhibiting or reducing volume expansions of a cathode.

The metal sulfide, for example, a transition metal sulfide may be selected from among $ZrS_2$, $FeS$, $FeS_2$, $CuS$, $Cu_2S$, $CuS_2$, $Cu_9S_8$, $Cu_7S_4$, $CoS$, $CoS_2$, $Co_3S_4$, $Co_9S_8$, $NiS$, $NiS_2$, $NigSs$, $Ni_3S_2$, $VS$, $VS_2$, $V_2S_3$, $V_2S_5$, $VS_4$, $NbS_2$, $NbS_3$, $NbS_4$, $NbS_5$, $NB_2S_3$, $Nb_2S_5$, $TaS_2$, $TaS_3$, $TaS_4$, $TaS_5$, $Ta_2S_3$, $Ta_2S_5$, $Cr_2S_3$, $CrS_3$, $MoS_2$, $MoS_3$, $MoS_4$, $WS_2$, $WS_3$, $WS_4$, $WS_5$, $MnS$, $Mn_2S_3$, $TiS_2$, $NiNb_3S_6$, $Cu_2MoS_4$ and/or $Cu_4Mo_6S_8$. For example, at least one metal sulfide may be selected from among $FeS_2$, $CuS_2$, $CoS_2$, $Co_3S_4$, $NiS_2$, $VS_2$, $VS_4$, $NbS_2$, $NbS_3$, $NbS_4$, $NbS_5$, $TaS_2$, $TaS_3$, $TaS_4$, $TaS_5$, $CrS_3$, $MoS_2$, $MoS_3$, $MoS_4$, $WS_2$, $WS_3$, $WS_4$, and $WSs$. These transition metal sulfides may have, for example, a plate form, which is a two-dimensional form.

According to some embodiments, the inorganic electronically-conductive structure may be, for example, one or more metal oxides selected from among $VO_2$, $ReO_2$, $CrO_2$, $ReO_2$, $VO_2$, $SnO_2$, $TiO_2$, $ZrO_2$, $Al_2O_3$, $TeN$, $TiN$, $TiO$, $TiOx$ (0.75<x<1.45), $Ti_nO_{2n-1}$ (4<n<10), $ReO_3$, $CrO_2$, and $VO_2$, or a combination thereof.

For example, the inorganic electronically-conductive structure may be alumina fibers, zirconia fibers, titania fibers, TeN fibers, $SnO_2$ fibers, or a combination thereof. If the inorganic electronically-conductive structure has such a fiber form, the inorganic electronically-conductive structure may have a length of about 0.1 $\mu$m to about 5 $\mu$m, and a diameter of about 0.01 $\mu$m to about 0.5 $\mu$m, and an aspect ratio of 10 or more.

The amount of the inorganic electronically-conductive structure may be about 1 part by weight to about 20 parts by weight, about 1 part by weight to about 18 parts by weight, or about 1 part by weight to about 15 parts by weight with respect to 100 parts by weight of the composite. The amount of the fibrous carbonaceous material or two-dimensional carbonaceous structure may be about 1 part by weight to about 40 parts by weight, about 1 part by weight to about 30 parts by weight, for example, about 5 parts by weight to about 10 parts by weight, with respect to 100 parts by weight of the composite.

In some embodiments, with respect to 100 parts by weight of the composite, about 30 parts by weight to about 80 parts by weight of $M_2S$, about 1 part by weight to about 40 parts by weight of an alkali metal salt, about 1 part by weight to about 20 parts by weight of an inorganic electronically-conductive structure, and about 1 part by weight to about 40 parts by weight of a fibrous carbonaceous material or two-dimensional carbonaceous structure may be included.

In some embodiments, the size (e.g., particle size or diamter) ratio of inorganic electronically-conductive structure to LiI may be, for example, about 3:1 to about 0.5:1, and the size ratio of inorganic electronically-conductive structure to $Li_2S$ may be, for example, about 2:1 to about 0.5:1.

In some embodiments, the size of the inorganic electronically-conductive structure may be larger than the size of metal sulfide (e.g., lithium sulfide) and the alkali metal salt (LiI), and the particle size may gradually decrease in this order: the inorganic electronically-conductive structure > the alkali metal salt (LiI) > the $M_2S$. The "size" as used herein may be an arithmetic mean value of particle diameters of a plurality of particles measured utilizing software from a scanning electron microscope image.

The size ratio of inorganic electronically-conductive structure to LiI may be, for example, about 3:1 to about 1.5:1, and the size ratio of inorganic electronically-conductive structure to $Li_2S$ may be, for example, about 2:1 to about 1.5:1.

If the inorganic electronically-conductive structure has a two-dimensional plate form, the inorganic electronically-conductive structure may have a length (e.g., average length) of about 1 $\mu$m to about 50 $\mu$m, and a thickness (e.g., average thickness) of about 0.01 $\mu$m to about 10 $\mu$m, and the $M_2S$ may have a size of about 0.1 nm to about 10 $\mu$m.

The size of the alkali metal salt (LiI) may be about 1 nm to about 10 $\mu$m.

Unlike one-dimensional carbonaceous structures such as carbon nanofibers, the two-dimensional carbonaceous structures have a plate-shaped structure and may include, for example, graphene, graphene oxide, or a combination thereof.

Compared with one-dimensional carbonaceous structures, the two-dimensional carbonaceous structures have a greater specific surface area and due to having a "house-of-cards" structural model and corresponding effect, may help maintain the network structure successfully or suitably by thoroughly surrounding (e.g., being around) lithium sulfides. Further, in the event of volume expansions of lithium sulfides during the process of charging and discharging, a contact surface with cathode components may be relatively large, and connections well-maintained.

Increasing amounts of two-dimensional carbonaceous structures, e.g., graphene, in the composite may increase its electronic conductivity, but may decrease ionic conductivity. Therefore, the domain size of two-dimensional carbonaceous structures, e.g., graphene, may become important. If graphene is utilized as the two-dimensional carbonaceous structures, the domain size of graphene may be controlled or selected utilizing the thickness of the graphene.

The specific surface area of the two-dimensional carbon nanostructures may be about 1 $m^2$/g to about 50 $m^2$/g, about 1 $m^2$/g to about 30 $m^2$/g, or about 5 $m^2$/g to about 20 $m^2$/g. Further, the two-dimensional carbon nanostructures may have a thickness (e.g., average thickness) of about 10 nm to about 10 $\mu$m, about 100 nm to about 8 $\mu$m, about 500 nm to about 6 $\mu$m, about 1 $\mu$m to about 5 $\mu$m, or about 1 $\mu$m to 3 $\mu$m. By utilizing the composite that uses two-dimensional carbon nanostructures having a specific surface area, diameter, and thickness in their respective above ranges, it may be possible to prepare a solid secondary battery which exhibits improved lifespan characteristics by improving the electronic (electron) conductivity network inside the cathode. In some embodiments, strengthening the electronically conductive network may reduce the amount (i.e., the needed amount) of conductive material in the cathode, and thus improve the energy density in the electrode. Furthermore, because the amount of lithium sulfide relatively increases as the amount of conductive materials in cathode decreases, initial efficiency (and/or battery energy density) may improve.

In one or more embodiments, the graphene may have a thickness of about 10 nm to about 30 $\mu$m, about 100 nm to about 30 $\mu$m, or about 1 $\mu$m to about 3 $\mu$m.

The two-dimensional carbonaceous structures may include two-dimensional carbonaceous structures doped with a dopant, wherein the dopant may be an n-type (n-charge) dopant or a p-type (p-charge) dopant, and the dopant may include nitrogen (N), phosphorus (P), boron (B), sulfur (S), fluorine (F), chlorine (Cl), bromine (Br), germanium (Ge), gallium (Ga), or a combination thereof. Utilizing such doped two-dimensional carbonaceous structures may help control conductivity and side-reaction properties.

The dopant may include an n-type dopant, a p-type dopant, or a combination thereof. The n-type dopant may be, for example, a dopant that has more electrons than carbon, and therefore introduces electrons into a carbonaceous material. The p-type dopant may be a dopant that has fewer electrons than carbon, and therefore introduces holes into a two-dimensional carbonaceous structure. The carbonaceous structure may include, for example, a dopant-doped graphene. The doped graphene may include an n-type dopant, a p-type dopant, or a combination thereof. The dopant may include, for example, nitrogen (N), phosphorus (P), boron (B), sulfur (S), fluorine (F), chlorine (Cl), bromine (Br), germanium (Ge), gallium (Ga), or a combination thereof. For example, nitrogen (N) and phosphorus (P) are n-type dopants. For example, gallium (Ga) is a p-type dopant. The content (e.g., amount) of a dopant in the doped carbonaceous structure may be, for example, 3 wt% or less or 1 wt% or less. As the carbonaceous structure is doped with a dopant, the carbonaceous structure may have further increased conductivity.

M may be an alkali metal. The alkali metal may be Li or Na. The $M_2S$ may be, for example, $Li_2S$ and/or $Na_2S$. The composite may include a solid solution of the $M_2S$ and the alkali metal salt.

Because the $M_2S$ forms a composite with an alkali metal salt and an inorganic electronically-conductive structure or two-dimensional carbonaceous structure, the ionic conductivity and electronic conductivity of the $M_2S$ may also improve. Because the composite includes an alkali metal salt, the ionic conductivity of the composite cathode active material may improve and the internal resistance of the cathode and solid secondary battery including the composite cathode active material may be reduced. Because the composite includes a carbonaceous material, the electronic conductivity of the composite cathode active material may improve while the internal resistance of the cathode and solid secondary battery including the composite cathode active material may be reduced.

The composite includes $M_2S$ crystallites, and because the size of $M_2S$ crystallites is reduced to 21 nm or less, volume changes of the $M_2S$ crystallites during charging and discharging may be mitigated or reduced. For example, because the reduction of the size of $M_2S$ crystallites means that the volume change due to a single $M_2S$ crystallite may also decrease, the overall volume change of the composite during charging and discharging may be mitigated or reduced. For example, because grain boundaries between a plurality of $M_2S$ crystallites can more easily or suitably accommodate volume changes of $M_2S$ crystallites during charging and discharging as the size of $M_2S$ crystallites decreases, changes in the volume of the composite may be mitigated or reduced during charging and discharging. Further, the likelihood of defect, e.g., of cracks, due to volume changes of the composite during charging and discharging may decrease. With the composite cathode active material including the composite of the present embodiment, a secondary battery including the composite cathode active material may have improved cycling performance. For example, a lithium battery including the composite cathode active material may have improved lifespan characteristics.

The composite includes $M_2S$ crystallites, and because the size of $M_2S$ crystallites is reduced to 21 nm or less, the contact surfaces between the $M_2S$ crystallites and the alkali metal salts and/or carbonaceous material may further increase. The increased contact surfaces between the $M_2S$ crystallites and the alkali metal salts and/or carbonaceous material may lead to a further increase in the ionic conductivity and/or electronic conductivity of the composite. If a composite cathode active material includes such composite according to the present embodiments, reversibility of electrode reactions may improve in a secondary battery including the composite cathode active material. This may result in an increase of the specific capacity of the composite cathode active material.

As the composite includes a solid solution of $M_2S$ and alkali metal salt, the ionic conductivity of the composite may increase. For example, because the solid solution of $M_2S$ and alkali metal salt includes alkali metal ions provided within $M_2S$ crystallites, the solid solution of $M_2S$ and alkali metal salt may have improved ionic conductivity compared to the ionic conductivity of $M_2S$. As a result, the ionic conductivity of the composite may improve, and the internal resistance of the composite may be reduced. With the composite cathode active material including the composite of the present embodiments, a secondary battery including the composite cathode active material may have improved cycling performance. For example, a lithium battery including the composite cathode active material may have improved high-rate capability.

The composite of $Li_2S$, alkali metal salt, and carbonaceous structure may be distinguished from a simple mixture of $Li_2S$, alkali metal salt, and carbonaceous structures. Because the simple mixture of $Li_2S$, alkali metal salt, and carbonaceous structures may be unable to maintain dense interfaces between $Li_2S$, the alkali metal salt, and the carbonaceous structures, the simple mixture of $Li_2S$, alkali metal salt, and carbonaceous structures may provide high interfacial resistance and as a result, may cause deterioration of the lifespan characteristics of the solid secondary battery.

The composite may include $M_2S$. Due to high theoretical capacity of $M_2S$, a secondary battery having high energy density may be provided. However, $M_2S$ has low ionic conductivity and/or electronic conductivity, and to help address or rectify this shortcoming, $M_2S$ forms a composite with an alkali metal salt and a carbonaceous material. That is, the $M_2S$ may have a high theoretical capacity, and thus a secondary battery having a high energy density may be provided. However, in order to overcome the shortcomings such as the low ionic conductivity and/or electronic conductivity of the $M_2S$, a composite formed with the $M_2S$ and with the alkali metal salt and the carbon-based material may be utilized. For example, the amount of $M_2S$ in the composite may be, about 10 wt% to about 80 wt%, about 20 wt% to about 70 wt%, about 30 wt% to about 60 wt%, or about 40 wt% to about 60 wt%, with respect to the total weight of the composite. If the amount of $M_2S$ excessively increases (is too high), it may be difficult to improve the ionic conductivity and/or electronic conductivity of $M_2S$. If the amount of $M_2S$ is too low, the energy density of the secondary battery may deteriorate.

The composite may include an alkali metal salt. The alkali metal salt may be, for example, a compound that does not contain sulfur (S). The alkali metal salt may be, for example, a binary compound or a ternary compound. For example, the alkali metal salt may be a binary compound composed of an alkali metal and one element selected from Groups 13 to 17 of the Periodic Table of the Elements. For example, the alkali metal salt may be a ternary compound composed of an alkali metal and two elements selected from Groups 13 to 17 of the Periodic Table of the Elements.

The alkali metal salt may be, for example, a lithium salt. Examples of the binary compounds of the lithium salt may include LiI, LiBr, LiCl, LiF, LiH, $Li_2O$, $Li_2Se$, $Li_2Te$, $Li_3N$, $Li_3P$, $Li_3As$, $Li_3Sb$, $Li_3Al_2$, $LiB_3$, and combinations thereof. Examples of the ternary compounds of the lithium salt may include $Li_3OCl$, $LiPF_6$, $LiBF_4$, $LiSbF_6$, $LiAsF_6$, $LiClO_4$, $LiAlO_2$, $LiAlCl_4$, $LiNO_3$, $Li_2CO_3$, $LiBH_4$, $Li_2SO_4$, $Li_3BO_3$, $Li_3PO_4$, $Li_4NCl$, $Li_5NCl_2$, $Li_3BN_2$, and combinations thereof. With the composite including the lithium salt, the composite may have further improved ionic conductivity. For example, the lithium salt may more easily or suitably form a solid solution with $Li_2S$ inside the composite.

The alkali metal salt may be, for example, a sodium salt. Examples of the binary compounds of sodium salt may include NaI, NaBr, NaCl, NaF, $Na_2O$, $Na_2Se$, $Na_3N$, $Na_3P$, $Na_3As$, $Na_3Sb$, $Na_3Al_2$, $NaB_3$, and combinations thereof. Examples of the ternary compounds of sodium salt may include $Na_3OCl$, $NaBF_4$, $NaPF_6$, $NaAsF_6$, $NaClO_4$, $NaNO_3$, $NaAlO_2$, $NaAlCl_4$, $NaNO_3$, $Na_2CO_3$, $NaBH_4$, $Na_2SO_4$, $Na_3BO_3$, $Na_3PO_4$, $Na_4NCl$, $Na_5NCl_2$, $Na_3BN_2$, and combinations thereof. With the composite including the sodium salt, the composite may have further improved ionic conductivity. For example, the sodium salt may more easily or suitably form a solid solution with $Na_2S$ inside the composite.

In the composite, the amount of the alkali metal salt may be about 1 wt% to about 40 wt%, about 5 wt% to about 35 wt%, about 10 wt% to about 35 wt%, about 15 wt% to about 35 wt%, about 20 wt% to about 35 wt%, or about 25 wt% to about 35 wt%, with respect to the total weight of the composite. If the amount of the alkali metal salt excessively increases (is too high), the energy density of the solid secondary battery may deteriorate. If the amount of the alkali metal salt is excessively low (is too low), the ionic conductivity of the composite decreases (such that the internal resistance of the composite cathode active material may increase). As a result, the cycling performance of the solid secondary battery may deteriorate.

In the composite, the molar ratio of $M_2S$ to alkali metal salt may be, for example, about 50:50 to about 95:5, about 60:40 to about 95:5, about 60:40 to about 90:10, about 65:35 to about 90:10, about 65:35 to about 85:15, or about 70:30 to about 85:15. In the composite, the molar ratio of $M_2S$ to alkali metal salt may be, for example, about 50:50 to about 95:5, about 50:50 to about 90:10, about 50:50 to about 85:15, about 50:50 to about 80:20, about 50:50 to about 75:25, or about 50:50 to about 70:30. With the molar ratio of $M_2S$ to alkali metal salt in any of the above ranges, the cycling performance of a solid secondary battery including the composite cathode active material may further improve. If the molar fraction of $M_2S$ is excessively (too) high, the effect of the alkali metal salt on improving ionic conductivity may be negligible. If the molar fraction of $M_2S$ is excessively (too) low, the energy density of the solid secondary battery including the composite cathode active material may deteriorate.

In the composite, the molar ratio of $Li_2S$ to lithium salt may be, for example, about 50:50 to about 95:5, about 60:40 to about 95:5, about 60:40 to about 90:10, about 65:35 to about 90:10, about 65:35 to about 85:15, or about 70:30 to about 85:15. In the composite, the molar ratio of $Li_2S$ to lithium salt may be, for example, about 50:50 to about 95:5, about 50:50 to about 90:10, about 50:50 to about 85:15, about 50:50 to about 80:20, about 50:50 to about 75:25, or about 50:50 to about 70:30. With the molar ratio of $Li_2S$ to lithium salt being in any of the above ranges, the cycling performance of a solid secondary battery including the composite cathode active material may further improve. If the molar fraction of $Li_2S$ is excessively high, the effect of the lithium salt on improving ionic conductivity may be negligible. If the molar fraction of $Li_2S$ is excessively low, the energy density of a solid secondary battery including the composite cathode active material may deteriorate.

The molar ratio of $Na_2S$ to sodium salt in the composite may be identical to the molar ratio of $Li_2S$ to lithium salt described above, except that a sodium salt is utilized instead of the lithium salt.

For example, the amount of the fibrous carbonaceous material or carbonaceous structures included in the composite may be about 1 wt% to about 20 wt%, about 5 wt% to about 20 wt%, or about 5 wt% to about 10 wt%, with respect to the total weight of the composite. If the amount of the fibrous carbonaceous material or carbonaceous structures excessively increases, the energy density of the secondary battery may deteriorate. If the amount of the fibrous carbonaceous material or carbonaceous structures excessively decreases, the electronic conductivity of the composite decreases, such that the internal resistance of the composite cathode active material may increase. As a result, the cycling performance of the solid secondary battery may deteriorate.

On the XRD spectrum of the composite cathode active material, peaks regarding (e.g., corresponding to) the crystal planes of molybdenum sulfide ($MoS_2$) appear at a diffraction angle of $2\theta = 14.5\pm0.5$, diffraction angle of $2\theta = 32.5\pm0.5°$, and diffraction angle of $2\theta = 58.5\pm0.5°$.

The peaks appearing at a diffraction angle of $2\theta = 14.5\pm0.5°$ concern (e.g., correspond to) the (002) crystal plane of molybdenum sulfide ($MoS_2$), and the diffraction angle of $2\theta$ may be, for example, 14.1 °. Furthermore, the peaks appearing at a diffraction angle of $2\theta = 32.5\pm0.5°$ concern (e.g., correspond to) the (100) crystal plane of molybdenum sulfide ($MoS_2$), and the diffraction angle of $2\theta$ may be, for example, 32.9°. The peaks appearing at a diffraction angle of $2\theta = 58.5\pm0.5°$ concern (e.g., correspond to) the (110) crystal plane of molybdenum sulfide ($MoS_2$), and the diffraction angle of $2\theta$ may be, for example, 58.8°.

On the X-ray diffraction (XRD) spectrum of the composite cathode active material, if the composite cathode active material shows a first peak appearing at a diffraction angle of $2\theta = 14.5\pm0.5°$, a second peak appearing at a diffraction angle of $2\theta = 32.5\pm0.5°$, and a third peak appearing at a diffraction angle of $2\theta = 58.5\pm0.5°$, and the XRD spectrum of the $MoS_2$ utilized to prepare the composite according to the present embodiments shows a fourth peak appearing at a diffraction angle of $2\theta = 14.5\pm0.5°$, a fifth peak appearing at a diffraction angle of $2\theta = 32.5\pm0.5°$, and a sixth peak appearing at a diffraction angle of $2\theta = 58.5\pm0.5°$, a first diffraction angle of each of the first, second, and third peaks may appear shifted to a lower angle than a second diffraction angle of each of the fourth, fifth, and sixth peaks. As the composite is formed during the milling process, a shift to a lower angle may occur.

For example, the position of the first peak may have shifted to a lower angle than the position of the second peak. Further, the intensity of the first peak appearing at a diffraction angle of $2\theta = 14.5\pm0.5°$ may be decreased relative to the intensity of the fourth peak appearing at a diffraction angle of $2\theta = 14.5\pm0.5°$ on the XRD spectrum of the $MoS_2$ utilized in the preparation of the composite.

In some embodiments, the crystal change of a $MoS_2$ material may be observed in XRD during a milling process. The lithium sulfide-molybdenum sulfide ($MoS_2$)-carbonaceous material composite may have a reduced crystallite size as compared to the lithium sulfide utilized in the preparation of the composite. Because the lithium sulfide-molybdenum sulfide ($MoS_2$)- carbonaceous material composite has a reduced crystallite size, volume changes of the crystallite during charging and discharging may be reduced, and thus, the composite including a plurality of the crystallites may exhibit reduced volume changes during charging and discharging. Defects such as crack formation during charging and discharging of the composite cathode active material including the composite may be suppressed or reduced. As a result, a solid secondary battery including the composite cathode active material may have improved cycling performance.

For example, a first lattice constant d1 derived from a first peak appearing at a diffraction angle of $2\theta = 27° \pm 2.0°$, corresponding to the (111) crystal plane of $M_2S$, on the XRD spectrum of the composite, may be larger than a second lattice constant d2 derived from a second peak appearing at a diffraction angle of $2\theta = 27° \pm 2.0°$, corresponding to the (111) crystal plane of $M_2S$ on the XRD spectrum of the $M_2S$ utilized to prepare the composite according to the present embodiments. Because the $M_2S$-alkali metal salt-carbonaceous structure composite has a larger lattice constant (d) than the $M_2S$ utilized for the preparation of the composite, alkali metal ions inside the $M_2S$ crystal structures of the composite may be more easily or suitably transported. The composite cathode active material including the composite may have further improved ionic conductivity. A secondary battery including the composite cathode active material may have reduced internal resistance and improved cycling performance. The difference between the first lattice constant d1 and the second lattice constant d2 may be 0.05 Å or more, 0.1 Å or more, 0.15 Å or more, 0.2 Å or more, or 0.25 Å or more. For example, the size of the first lattice constant d1 may be 5.78 Å or more, 5.80 Å or more, 5.82 Å or more, 5.85 Å or more, 5.90 Å or more, 5.95 Å or more, or 6.0 Å or more. With the composite having the first lattice constant d1 in any of the above ranges, the composite cathode active material including the composite may have further improved ionic conductivity. A secondary battery including the composite cathode active material may have reduced internal resistance and improved cycling performance.

For example, if on an XRD spectrum of the composite, a first peak appearing at a diffraction angle of $2\theta = 27° \pm 2.0°$ and corresponding to the (111) plane of $M_2S$ may have a first diffraction angle, and on an XRD spectrum of the $M_2S$ utilized for the preparation of the composite according to the present embodiments, a second peak appearing at a diffraction angle of $2\theta = 27° \pm 2.0°$ and corresponding to the (111) plane of $M_2S$ may have a second diffraction angle, the first diffraction angle may be smaller than the second diffraction angle. For example, the position of the first peak may have shifted to a lower angle than the position of the second peak. The $M_2S$-alkali metal salt-carbonaceous material composite may then have a reduced crystallite size than the $M_2S$ utilized in the preparation of the composite. Because the $M_2S$-alkali metal salt-carbonaceous material composite has a reduced crystallite size, volume changes of the crystallite during charging and discharging are reduced, and thus, the composite including a plurality of the crystallites may exhibit reduced volume changes during charging and discharging. Defects such as crack formation during charging and discharging of the composite cathode active material including the composite may be suppressed or reduced. As a result, a solid secondary battery including the composite cathode active material may have improved cycling performance.

For example, on the XRD spectrum of the composite, a first peak appearing at a diffraction angle of $2\theta = 27° \pm 2.0°$, corresponding to the (111) crystal plane of $M_2S$, may have a first full width at half maximum FWHM1, and on the XRD spectrum of the $M_2S$ utilized for the preparation of the composite according to the present embodiments, a second peak appearing at a diffraction angle of $2\theta = 27° \pm 2.0°$, corresponding to the (111) crystal plane of $M_2S$, may have a second full width at half maximum FWHM2, wherein FWHM1 may be greater than FWHM2. The $M_2S$-alkali metal salt-carbonaceous material composite may then have an increased lattice strain as compared with the $M_2S$ utilized in the preparation of the composite. For example, as the $M_2S$ and the alkali metal salt form a solid solution, the $M_2S$-alkali metal salt-carbonaceous structure composite may have an increased lattice strain. Because the $M_2S$-alkali metal salt-carbonaceous structure composite has an increased FWHM as compared with the $M_2S$ utilized in the composite preparation, a composite cathode active material including the composite may have further improved ionic conductivity. A solid secondary battery including the composite cathode active material may have reduced internal resistance and improved cycling performance.

The first full width at half maximum may be, for example, 1° or more, 1.05° or more, 1.10° or more, or 1.15° or more. Because the composite has FWHM1 in any of the above ranges, the composite cathode active material including the composite may have further improved ionic conductivity. A secondary battery including the composite cathode active material may have reduced internal resistance and improved cycling performance.

The particle size (diameter) of the composite cathode active material (in the form of particles or composite particles), for example, the size (diameter) of composite particles, may be, for example, 10 μm or less, 8 μm or less, 5 μm or less, 2 μm or less, 1.5 μm or less, or 1 μm or less. The particle size of the composite cathode active material may be, for example, in a range of about 1 μm to about 10 μm, in a range of about 2 μm to about 8 μm, or in a range of about 3 μm to about 8 μm. The size of the composite particles may be, for example, in a range of about 0.1 μm to about 10 μm, about 0.1 μm to about 8 μm, about 0.1 μm to about 5 μm, about 0.1 μm to about 2 μm, about 0.1 μm to about 1.5 μm, or about 0.1 μm to about 1 μm. With the composite particles having a size in any of the above ranges, volume changes during charging and discharging may be suppressed or reduced, and thus, degradation of a composite cathode active material including the composite during charging and discharging may be suppressed or reduced. If the size of the composite particles excessively increases, volume changes of the composite during charging and discharging increase, and thus, degradation of a composite cathode active material including the composite may be accelerated. Accordingly, a solid secondary battery including the composite cathode active material of the present embodiments may have improved cycling performance.

A solid secondary battery including the composite cathode active material may have improved cycling performance, for example, improved lifespan characteristics. For example, a size of composite particles, e.g., a particle diameter of the composite, may be measured utilizing a laser diffraction method, a scanning electron microscope, and/or the like. For example, the particle diameter of the composite may be an arithmetic mean value of particle diameters of a plurality of particles measured utilizing software from a scanning electron microscope image.

Because the composite further contains an alkali metal salt having ionic conductivity and carbonaceous structures having electronic conductivity, in addition to lithium sulfide ions, conduction of electrons from the surface of the composite to the inside of the composite may be facilitated. The internal resistance of the composite cathode active material including the composite may decrease, and the cycling performance of a solid secondary battery including the composite cathode active material may further improve.

The diameter and length of the carbon nanostructure may be measured from an SEM (Scanning electron microscope) image and/or an optical microscope image. In other embodiments, the diameter and/or length of the carbon nanostructure may be measured by a laser diffraction method. For example, the carbon nanostructure may be dispersed in a solvent, etc. to prepare dispersion of the carbon nanostructures. The dispersion was utilized for the preparation of the composite.

For example, with respect to 100 parts by weight of the composite, about 10 parts by weight to about 80 parts by weight of $M_2S$, about 1 part by weight to about 40 parts by weight of the alkali metal salt, and about 1 part by weight to about 20 parts by weight of the carbonaceous structure may be included. For example, the amount of $M_2S$ included in the composite may be about 10 parts by weight to about 80 parts by weight, about 20 parts by weight to about 70 parts by weight, about 30 parts by weight to about 60 parts by weight, or about 40 parts by weight to about 60 parts by weight, with respect to 100 parts by weight of the composite. For example, the amount of the alkali metal salt included in the composite may be about 10 parts by weight to about 40 parts by weight, about 15 parts by weight to about 40 parts by weight, about 20 parts by weight to about 40 parts by weight, or about 25 parts by weight to about 35 parts by weight, with respect to 100 parts by weight of the composite. For example, the amount of the carbonaceous material included in the composite may be about 1 part by weight to about 20 parts by weight, about 5 parts by weight to about 20 parts by weight, or about 5 parts by weight to about 15 parts by weight, with respect to 100 parts by weight of the composite. With the composite having the $M_2S$, the alkali metal salt, and the carbonaceous material composition in any of the above ranges, a composite cathode active material including the composite may be provided with excellent or suitable ionic conductivity and/or electronic conductivity.

For example, the composite may have an ionic conductivity at 25 °C of $1\times10^{-5}$ S/cm or more, $2\times10^{-5}$ S/cm or more, $4\times10^{-5}$ S/cm or more, $6\times10^{-5}$ S/cm or more, $8\times10^{-5}$ S/cm or more, or $1\times10^{-4}$ S/cm or more. Ionic conductivity may be measured, for example, utilizing electrochemical impedance spectroscopy, a DC polarization method, and/or the like. With the composite having an ionic conductivity in any of the above ranges, the composite cathode active material containing the composite may have reduced internal resistance. A solid secondary battery including the composite cathode active material may have improved cycling performance. For example, the composite may have an electronic conductivity at 25 °C of $1\times10^{-5}$ S/cm or more, $2\times10^{-5}$ S/cm or more, $4\times10^{-5}$ S/cm or more, $6\times10^{-5}$ S/cm or more, $8\times10^{-5}$ S/cm or more, or $1\times10^{-4}$ S/cm or more. Electronic conductivity may be measured, for example, utilizing electrochemical impedance spectroscopy, a DC polarization method, and/or the like. With the composite having an electronic conductivity in any of the above ranges, the composite cathode active material containing the composite may have reduced internal resistance. A solid secondary battery including the composite cathode active material may have improved initial efficiency, electrode energy density, and/or lifespan characteristics.

**Cathode**

**Cathode: Cathode Active Material**

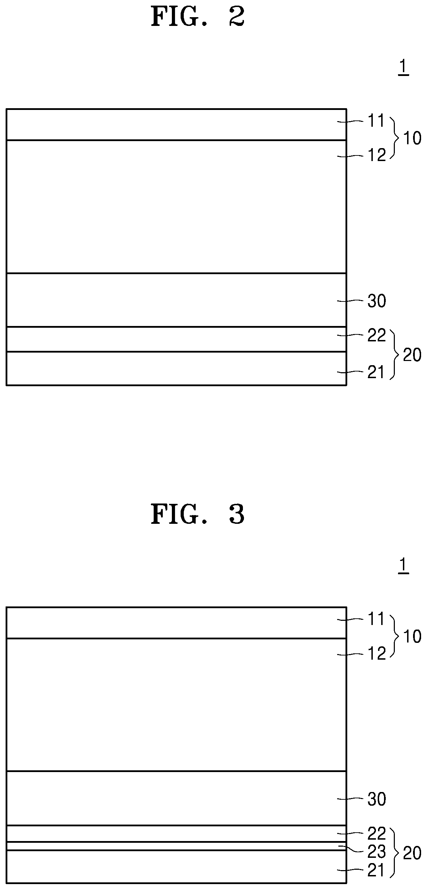

Referring to FIGS. 2 to 7, a cathode 10 may include a cathode current collector 11; and a cathode active material layer 12 provided on one side or both sides of the cathode current collector 11. The cathode active material layer 12 may include a cathode active material.

The cathode active material layer 12 may include a composite cathode active material according to embodiments. The cathode active material layer may further include a solid electrolyte. Because the cathode includes the composite cathode active material and the solid electrolyte, internal resistance may be further reduced. Thus, the cycling performance of a solid secondary battery provided with the cathode may further improve.

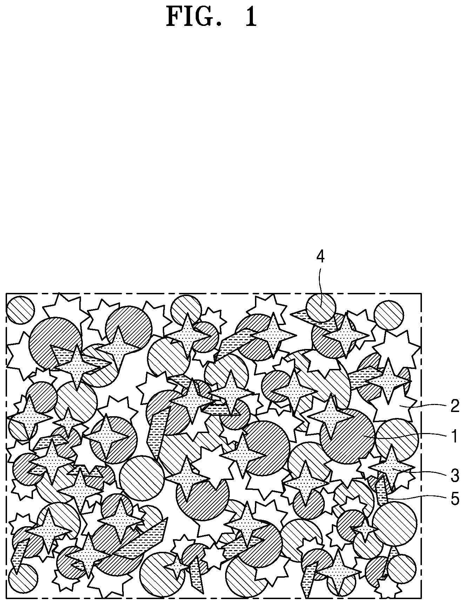

FIG. 1 schematically shows a structure of a cathode active material layer according to embodiments. In FIG. 1, $Li_2S$ is utilized as an example of $M_2S$, LiI is utilized as an example of the alkali metal salt, and carbon nanofibers (CNFs) are utilized as fibrous carbonaceous material.

Referring to the foregoing, the cathode active material layer contains $Li_2S$ (100), LiI (2), and inorganic electronically-conductive structure (3). Including CNFs, which is a one-dimensional structure, may lead to a long-path network effect, and including inorganic electronically-conductive structures, which is a two-dimensional structure, may bring about a house-of-cards effect, thus significantly improving the electron conduction network inside the cathode. As shown in FIG. 1, the size relationships of the inorganic electronically-conductive structure (3), LiI (2), and $Li_2S$ (100) are $1 \leq 2 < 3$. If the components have sizes in this order, the inorganic electronically-conductive structure may easily or suitably form a network imparting electronic conductivity between lithium sulfides, which is an insulator. The sizes of the inorganic electronically-conductive structure, LiI, and $Li_2S$ refer to their respective average sizes.

Referring to FIGS. 2 to 7, a cathode 10 may include a cathode current collector 11; and a cathode active material layer 12 provided on one side or both sides of the cathode current collector 11. The cathode active material layer 12 may include the composite cathode active material and the solid electrolyte.

The cathode active material layer 12 may include about 40 parts by weight to about 90 parts by weight, about 40 parts by weight to about 80 parts by weight, about 50 to about 80 parts by weight, or about 50 parts by weight to about 70 parts by weight of the composite cathode active material, with respect to 100 parts by weight of the cathode active material layer 12. If the amount of the composite cathode active material excessively decreases, the energy density of the solid secondary battery may deteriorate. If the amount of the composite cathode active material excessively increases, degradation of the cathode by volume changes of the cathode during charging and discharging may be accelerated. As a result, the cycling performance of the solid secondary battery 1 may deteriorate.

The cathode active material layer 12 may further include other suitable cathode active materials, in addition to the composite cathode active materials above.

The other cathode active materials may include, for example, a $Li_2S$-containing composite. Examples of the $Li_2S$ composites may include a composite of $Li_2S$ and carbonaceous material; a composite of $Li_2S$, a carbonaceous material, and a solid electrolyte; a composite of $Li_2S$ and a solid electrolyte; a composite of $Li_2S$ and a lithium salt; a composite of $Li_2S$ and a metal carbide; a composite of $Li_2S$, carbonaceous material, and a metal carbide; a composite of $Li_2S$ and a metal nitride; a composite of $Li_2S$, carbonaceous material, and a metal nitride; or a combination thereof.

The composite of $Li_2S$ and carbonaceous material may include a carbonaceous material. For details of the carbonaceous material, refer to the carbonaceous material of the composite cathode active material described herein. The method of preparing the composite of $Li_2S$ and carbonaceous material may be a dry method, a wet method, or a combination thereof; however, the method is not limited thereto and may be any suitable method available in the art. For example, the method of preparing the composite of $Li_2S$ and carbonaceous material may be milling, heat treatment, deposition, and/or the like; but the method is not necessarily limited thereto and may be any suitable method available in the art.

The composite of $Li_2S$, carbonaceous material, and solid electrolyte may include a carbonaceous material and a solid electrolyte. For details of the carbonaceous material, refer to the composite of $Li_2S$ and carbonaceous material described above. The solid electrolyte may be, for example, any suitable material available as an ionically conductive material in the art. The solid electrolyte may be, for example, an inorganic solid electrolyte. The solid electrolyte may be, for example, a crystalline solid electrolyte, an amorphous solid electrolyte, or a combination thereof. The solid electrolyte may be, for example, a sulfide-based solid electrolyte, an oxide-based solid electrolyte, or a combination thereof. The sulfide-based solid electrolyte may contain, for example, Li, S, and P, and may optionally further contain a halogen element. The sulfide-based solid electrolyte may be selected from the sulfide-based solid electrolytes utilized in the electrolyte layer. The sulfide-based solid electrolyte may have an ionic conductivity of $1 \times 10^{-5}$ S/cm or more at room temperature, for example. The oxide-based solid electrolyte may contain, for example, Li, O, and a transition metal element, and may optionally further contain other elements. For example, the oxide-based solid electrolyte may be a solid electrolyte having an ionic conductivity of $1 \times 10^{-5}$ S/cm or more at room temperature. The oxide-based solid electrolyte may be selected from the oxide-based solid electrolytes utilized in the electrolyte layer.

The composite of $Li_2S$ and solid electrolyte may include a solid electrolyte. For details of the solid electrolyte, refer to the composite of $Li_2S$, carbonaceous material, and solid electrolyte described above.

The composite of $Li_2S$ and a lithium salt may include $Li_2S$ and a lithium salt. For details of the lithium salt, refer to the lithium salt of the composite cathode active material described herein. The lithium salt may be at least one lithium halide compound selected from among LiF, LiCl, LiBr, and LiI. For example, the composite of $Li_2S$ and a lithium salt may be a $Li_2$-lithium halide composite. Because the composite of $Li_2S$ and lithium halide includes a lithium halide compound, further improved ionic conductivity may be provided. The composite of $Li_2S$ and a lithium salt may be distinguished from a simple mixture of $Li_2S$ and lithium salt. Because the simple mixture of $Li_2S$ and a lithium salt fails to maintain dense interfaces between $Li_2S$ and the lithium salt, the simple mixture of $Li_2S$ and a lithium salt may provide high interfacial resistance and cause deterioration of the lifespan characteristics of the solid secondary battery.

The composite of $Li_2S$ and a metal carbide may include a metal carbide. The metal carbide may be, for example, a two-dimensional metal carbide. The two-dimensional metal carbide may be represented by, for example, $M_{n+1}C_nT_x$ (where M is a transition metal, T is a terminal group, wherein T is O, OH and/or F, n = 1, 2, or 3, and x is the number of terminal groups). The two-dimensional metal carbide may be, for example, $Ti_2CT_x$, $(Ti_{0.5}, Nb_{0.5})_2CT_x$, $Nb_2CT_x$, $V_2CT_x$,

$Ti_3C_2T_x$, $(V_{0.5}, Cr_{0.5})_3C_2T_x$, $Ti_3CNT_x$, $Ta_4C_3T_x$, $Nb_4C_3T_x$, or a combination thereof. The surface of the two-dimensional metal carbide may be terminated by (may include a terminal group such as) O, OH, and/or F.

The composite of $Li_2S$, carbonaceous material, and a metal carbide may include a carbonaceous material and a metal carbide. For details of the carbonaceous material, refer to the composite of $Li_2S$ and carbonaceous material described above. For details of the metal carbide, refer to the composite of $Li_2S$ and a metal carbide described above.

The composite of $Li_2S$ and a metal nitride may include a metal nitride. The metal nitride may be, for example, a two-dimensional metal nitride. The two-dimensional metal nitride may be represented by, for example, $M_{n+1}N_nT_x$ (where M is a transition metal, T is a terminal group, wherein T is O, OH and/or F, n = 1, 2, or 3, and x is the number of terminal groups). The surface of the two-dimensional metal nitride may be terminated by (may include a terminal group such as) O, OH, and/or F.

The composite of $Li_2S$, carbonaceous material, and a metal nitride may include a carbonaceous material and a metal nitride. For details of the carbonaceous material, refer to the composite of $Li_2S$ and carbonaceous material described above. For details of the metal nitride, refer to the composite of $Li_2S$ and a metal nitride described above.

The cathode active material layer 12 may further include, for example, a sulfide-based compound distinguished from the cathode active materials described above. The sulfide-based compound may be, for example, a compound including sulfur and a metal element other than Li. The sulfide-based compound may be, for example, a compound including sulfur and a metal element with an atomic weight of 10 or more, that belongs to Groups 1 to 14 in the Periodic Table of the Elements. The sulfide-based compound may be, for example, $FeS_2$, $VS_2$, NaS, MnS, FeS, NiS, CuS, or a combination thereof. As the cathode active material layer further includes a sulfide-based compound, cycling performance of a solid secondary battery may further improve. The amount of such a sulfide-based compound included in the cathode active material layer 12 may be 10 wt% or less, 5 wt% or less, 3 wt% or less, or 1 wt% or less, with respect to the total weight of the cathode active material layer 12.

**Cathode: Solid Electrolyte**

The cathode active material layer 12 may further include, for example, a solid electrolyte. The solid electrolyte may be a sulfide-based solid electrolyte, for example. The solid electrolyte included in the cathode 10 may be identical to or different from a solid electrolyte included in the electrolyte layer 30. For details of the solid electrolyte, refer to the description of the electrolyte layer 30.

The solid electrolyte included in the cathode active material layer 12 may be in the form of particles and have a smaller median particle diameter D50 than that of the solid electrolyte included in the electrolyte layer 30. For example, the median particle diameter D50 of the solid electrolyte (e.g., in the form of particles) included in the cathode active material layer 12 may be 90 % or less, 80 % or less, 70 % or less, 60 % or less, 50 % or less, 40 % or less, 30 % or less, or 20 % or less, relative to the median particle diameter D50 of the solid electrolyte (e.g., in the form of particles) included in the electrolyte layer 30. D50 average particle diameter may be, for example, a median particle diameter (D50). Median particle diameter (D50) may refer to a particle size corresponding to a cumulative volume of 50 vol% as counted from the smallest particle size in a particle size distribution measured by a laser diffraction method.

With respect to 100 parts by weight of the cathode active material layer 12, the solid electrolyte may be included in an amount of about 10 parts by weight to about 60 parts by weight, about 10 parts by weight to about 50 parts by weight, about 20 parts by weight to about 50 parts by weight, or about 30 parts by weight to about 50 parts by weight. If the amount of the solid electrolyte excessively decreases, the internal resistance of the cathode increases, causing the cycling performance of the secondary battery to deteriorate. If the amount of the sulfide-based solid electrolyte excessively increases, the energy density of the secondary battery 1 may decrease.

**Cathode: Conductive Material**

The cathode active material layer 12 may further include a conductive material. The conductive material may be, for example, a carbonaceous conductive material, a metal-based conductive material, or a combination thereof. Examples of the carbonaceous conductive material may include graphite, carbon black, acetylene black, Ketjen black, carbon fibers, and a combination thereof. However, the carbonaceous conductive material is not limited to the aforementioned examples and may be any suitable material available as a carbonaceous conductive material in the art. The metal-based conductive material may be metal powder, metal fibers, or a combination thereof, but without being limited thereto, may be any suitable metal-based conductive material available in the art. For example, the amount of the conductive material included in the cathode active material layer 12 may be about 1 wt% to about 30 wt%, about 1 wt% to about 20 wt%, about 1 wt% to about 10 wt%, with respect to the total weight of the cathode active material layer 12.

The cathode active material layer may include a carbonaceous material and the carbonaceous material may be provided only in the composite cathode active material. The cathode active material layer 12 may not contain any additional carbonaceous materials, other than the composite cathode active material provided with the carbonaceous material. Because the cathode active material layer does not contain any additional carbonaceous materials, the cathode and the secondary battery 1 may have improved energy density, and the manufacturing process thereof may be simplified. In present disclosure, "not including a or any 'component'" "excluding a or any 'component'", "'component'-free", and/or the like refers to that the "component" not being added, selected or utilized as a component in the composition, but the "component" of less than a suitable amount may still be included due to other impurities and/or external factors.

**Cathode: Binder**

The cathode active material layer 12 may further include a binder. The binder may be, for example, styrene butadiene rubber (SBR), polytetrafluoroethylene, polyvinylidene fluoride, polyethylene, and/or the like, but without being limited to the aforementioned examples, may utilize any suitable material utilized as a binder in the art. The amount of the binder included in the cathode active material layer 12 may be, for example, about 1 wt% to about 10 wt% with respect to the total weight of the cathode active material layer 12. In some embodiments, the binder may not be provided.

**Cathode: Other Additives**

The cathode active material layer 12 may further include, for example, an additive such as a filler, a coating agent, a dispersing agent, and/or an ionically conductive aid, in addition to the cathode active material, the solid electrolyte, the binder, and the conductive material described above.

For the filler, coating agent, dispersing agent, and/or ion-conducting aid that may be included in the cathode active material layer 12, any suitable material that can be utilized in an electrode of a solid secondary battery may be utilized.

**Cathode: Cathode Current Collector**

For example, the cathode current collector 11 may utilize a plate, a foil, and/or the like, formed of indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof. In some embodiments, the cathode current collector 11 may not be provided. The cathode current collector 11 may have a thickness of, for example, about 1 $\mu$m to about 100 $\mu$m, about 1 $\mu$m to about 50 $\mu$m, about 5 $\mu$m to about 25 $\mu$m, or about 10 $\mu$m to about 20 $\mu$m.

For example, the cathode current collector 11 may include a base film, and a metal layer provided on one side or both sides of the base film. The base film may include, for example, a polymer. For example, the polymer may be a thermoplastic polymer. For example, the polymer may include polyethylene terephthalate (PET), polyethylene (PE), polypropylene (PP), polybutylene terephthalate (PBT), polyimide (PI), or a combination thereof. For example, the base film may be an insulator. As the base film includes an insulating thermoplastic polymer, in the event of a short circuit, the base film is softened or liquefied, blocking the operation of the battery, to thereby prevent or reduce a rapid increase in electrical current. For example, the metal layer may include indium (In), copper (Cu), magnesium (Mg), stainless steel, titanium (Ti), iron (Fe), cobalt (Co), nickel (Ni), zinc (Zn), aluminum (Al), germanium (Ge), or an alloy thereof. In the event of an overcurrent, the metal layer may be disconnected, thus acting as an electrochemical fuse to provide protection against short circuits. A limiting current and a maximum current may be controlled or selected through controlling a thickness of the metal layer. The metal layer may be plated or deposited on the base film. As the thickness of the metal layer decreases, the limiting current and/or maximum current of the cathode current collector 11 decrease, and therefore, the stability of the lithium battery during a short circuit may improve. A lead-tab may be added on the metal layer for connection to the outside. The lead-tab may be welded to the metal layer or a metal layer/base film laminate by ultrasonic welding, laser welding, spot welding, and/or the like. As the base film and/or the metal layer melt during welding, the metal layer may be electrically connected to the lead-tab. For stronger welding between the metal layer and the lead-tab, a metal chip may be added between the metal layer and the lead-tab. The metal chip may be a flake of the same material as the metal of the metal layer. For example, the metal chip may be a metal foil, a metal mesh, and/or the like. For example, the metal chip may be an aluminum foil, a copper foil, an SUS (stainless steel) foil, and/or the like. By welding the metal layer with the lead-tab after placing the metal chip on the metal layer, the lead-tab may be welded to a metal chip/metal layer laminate or a metal chip/metal layer/base film laminate. As the base film, the metal layer, and/or the metal chip melt during welding, the metal layer or the metal layer/metal chip laminate may be electrically connected to the lead-tab. A metal chip and/or a lead-tab may be further added on a part of the metal layer. For example, the base film may have a thickness of about 1 $\mu$m to about 50 $\mu$m, about 1.5 $\mu$m to about 50 $\mu$m, about 1.5 $\mu$m to about 40 $\mu$m, or about 1 $\mu$m to about 30 $\mu$m. With the base film having a thickness within any of the above ranges, the weight of the electrode assembly may be more effectively or suitably reduced. For example, the base film may have a melting point of about 100 °C to about 300 °C, about 100 °C to about 250 °C or less, or about 100 °C to about 200 °C. Because the base film has a melting point within any of the above ranges, the base film may easily or suitably melt and be bonded to the lead-tab while welding the lead-tab. To improve adhesion between the base film and the metal layer, a surface treatment such as corona treatment may be performed on the base film. For example, the metal layer may have a thickness of about 0.01 μm to about 3 μm, about 0.1 μm to about 3 μm, about 0.1 μm to about 2 μm, or about 0.1 μm to about 1 μm. With the metal layer having a thickness within any of the above ranges, the electrode assembly may provide suitable stability while maintaining (or substantially maintaining) conductivity. For example, the metal chip may have a thickness of about 2 μm to about 10 μm, about 2 μm to about 7 μm, or about 4 μm to about 6 μm. With the metal chip having a thickness within any of the above ranges, the metal layer and the lead-tab may be more easily or suitably connected. Because the cathode current collector 11 has the above structure, the weight of the cathode may be reduced, and as a result, energy density of the cathode and the lithium battery may improve.

**Cathode: Inactive Member**

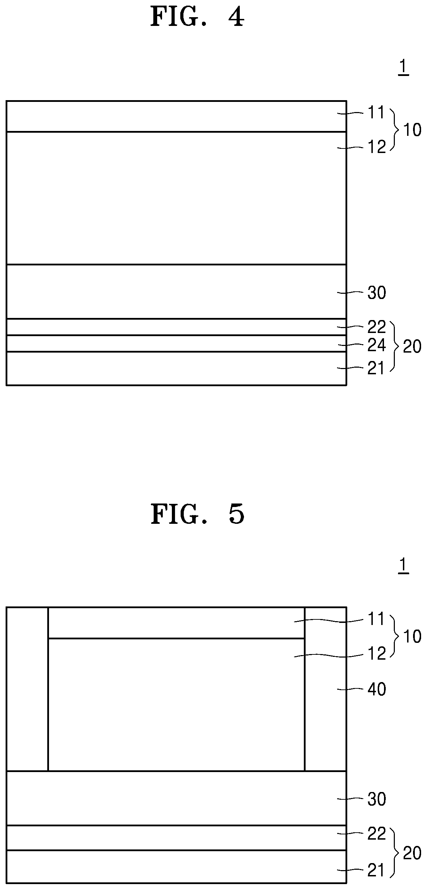

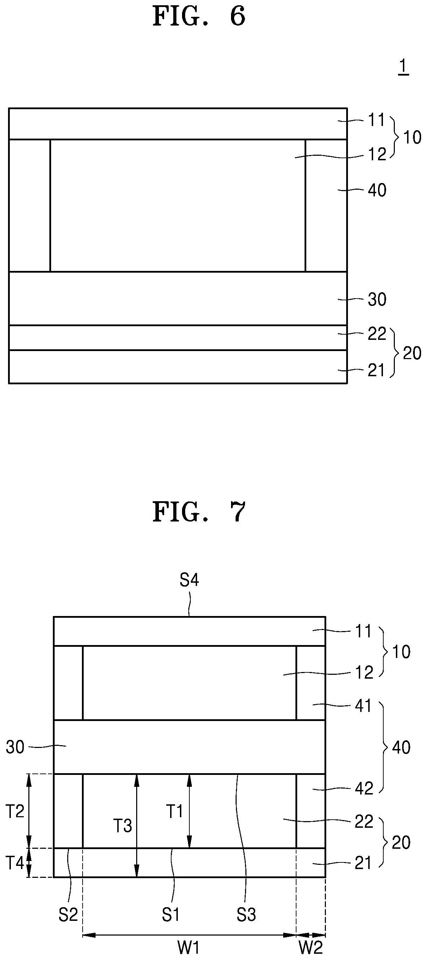

Referring to FIGS. 5 and 6, a cathode 10 may include a cathode current collector 11 and a cathode active material layer 12 provided on one surface of the cathode current collector 11. On one side surface of the cathode 10, an inactive member 40 may be provided. Referring to FIG. 5, the inactive member 40 may be provided on one side surface of the cathode current collector 11 and the cathode active material layer 12. Referring to FIG. 6, the inactive member 40 may be provided on one side surface of the cathode active material layer 12 and provided between the electrolyte layer 30 and the cathode current collector 11 opposing (facing) the electrolyte layer 30. The inactive member 40 may not be provided on one side surface of the cathode current collector 11. For example, the electrolyte layer 30 may be a solid electrolyte layer. The inactive member may be an elastic member,

By including the inactive member 40, cracking of the solid electrolyte layer 30 may be prevented or reduced during manufacturing and/or during charging and discharging of the solid secondary battery 1, and as a result, the cycling performance of the solid secondary battery 1 may improve. In the solid secondary battery 1 that does not include the inactive member 40, due to a non-substantially uniform pressure applied to the electrolyte layer 30 that is in contact with the cathode 10 during manufacturing and/or charging and discharging of the solid secondary battery 1, cracks may form in the electrolyte layer 30, and due to growth of lithium metal caused thereby, the likelihood of a short circuit occurring may increase.

In the solid secondary battery 1, the thickness of the inactive member 40 may be greater than the thickness of the cathode active material layer 12, or equal to the thickness of the cathode active material layer 12. In other embodiments, in the solid secondary battery 1, the thickness of the inactive member 40 may be substantially the same as the thickness of the cathode 10. Because the thickness of the inactive member 40 is equal to the thickness of the cathode 10, a substantially uniform pressure may be applied between the cathode 10 and the electrolyte layer 30, and as the cathode 10 and the electrolyte layer 30 are sufficiently or suitably flush against each other, interfacial resistance between the cathode 10 and the electrolyte layer 30 may decrease. Further, as the electrolyte layer 30 is sufficiently or suitably sintered during the press manufacturing process of the solid secondary battery 1, the electrolyte layer 30 and the solid secondary battery 1 including the same may have decreased internal resistance.

The inactive member 40 may be in contact with the electrolyte layer 30 while being around (e.g., surrounding) a side surface of the cathode 10. As the inactive member 40 is in contact with the electrolyte layer 30 while being around (e.g., surrounding) a side surface of the cathode 10, in the electrolyte layer 30 that is not in contact with the cathode layer 10, cracking of the electrolyte layer 30 caused by a pressure difference during the press process may be effectively or suitably prevented or reduced. The inactive member 40, while being around (e.g., surrounding) a side surface of the cathode layer 10, may be separated from the anode layer 20, for example, from an anode active material layer 22. The inactive member 40 may be in contact with the electrolyte layer 30 while being around (e.g., surrounding) a side surface of the cathode 10, and may be apart from the anode 20. The risk of short circuits due to the cathode 10 and the first anode active material layer 22 coming into physical contact with each other, or overcharging of lithium, etc. may then be reduced. For example, because the inactive member 40 is concurrently (e.g., simultaneously) provided on one side surface of the cathode active material layer and one side surface of the cathode current collector 11, the risk of short circuiting due to the cathode current collector 11 and the anode 20 coming into contact may be effectively or suitably inhibited or reduced.

Referring to FIGS. 5 to 7, the inactive member 40 may extend from one side surface of a cathode layer 10 to an end portion (e.g., edge) of the electrolyte layer 30. As the inactive member 40 extends to the end portion (e.g., edge) of the electrolyte layer 30, formation of cracks at the end portion (e.g., edge) of the electrolyte layer 30 may be inhibited or reduced. The end portion (e.g., edge) of the electrolyte layer 30 may be an outermost portion that is contiguous with a side surface of the electrolyte layer 30. The inactive member 40 may extend up to the outermost portion that is contiguous with the side surface of the electrolyte layer 30. The inactive member 40 may be apart from the anode 20, more specifically, from the first anode active material layer 22. The inactive member 40 may extend to the end portion of the electrolyte layer 30 but may not come in contact with the anode 20. For example, the inactive member 40 may fill the space that extends from one side surface of the cathode 10 to the end portion of the electrolyte layer 30.

Referring to FIGS. 5 to 7, a width of the inactive member 40 extending from one side surface of the cathode 10 to an end portion of the electrolyte layer 30 may be, for example, about 1 % to about 30 %, about 1 % to about 25 %, about 1 % to about 20 %, about 1 % to about 20 %, about 1 % to about 15 %, about 1 % to about 10 %, or about 1 % to about 5 %, with respect to a width between one side surface of the cathode 10 and the other side surface of the cathode 10 opposing (e.g., facing) the one side surface. If the width of the inactive member 40 is excessively large, the energy density of the solid secondary battery 1 may decrease. If the width of the inactive member 40 is too small, the effect of placing the inactive member 40 may be negligible.

The surface area of the cathode 10 may be smaller than the surface area of the electrolyte layer 30 that is in contact with the cathode 10. The inactive member 40 compensates for the difference in surface area between the cathode 10 and the electrolyte layer 30, by being around (e.g., surrounding) the side surface of the cathode 10. Because the surface area of the inactive member 40 compensates for the difference between the surface area of the cathode 10 and the surface area of the electrolyte layer 30, cracking of the electrolyte layer 30 caused by a pressure difference during the pressing process may be effectively or suitably suppressed or reduced. For example, the sum of the surface area of the cathode 10 and the surface area of the inactive member 40 may be equal to the surface area of the electrolyte layer 30. For example, the electrolyte layer 30 may be a solid electrolyte layer.

For example, the surface area of the cathode 10 may be less than 100 %, less than 99 %, less than 98 %, less than 97 %, less than 96 %, or less than 95 %, with respect to the surface area of the electrolyte layer 30. For example, the surface area of the cathode 10 may be about 50 % to less than 100 %, about 50 % to about 99 %, about 55 % to about 98 %, about 60 % to about 97 %, about 70 % to about 96 %, about 80 % to about 95 %, or about 85 % to about 95 %, with respect to the surface area of the electrolyte layer 30.

If the surface area of the cathode 10 is equal to or larger than the surface area of the electrolyte layer 30, the likelihood of a short circuit occurring due to a physical contact between the anode 10 and the first anode active material layer 22, or a short circuit occurring due to overcharging of lithium, etc. increases. For example, the surface area of the cathode 10 may be equal to the surface area of the cathode active material layer 12. For example, the surface area of the cathode 10 may be equal to the surface area of the cathode current collector 11.

For example, the surface area of the inactive member 40 may be 50 % or less, 40 % or less, 30 % or less, 20 % or less, or 10 % or less, with respect to the surface area of the cathode 10. For example, the surface area of the inactive member 40 may be about 1 % to about 50 %, about 5 % to about 40 %, about 5 % to about 30 %, about 5 % to about 20 %, or about 5 % to about 15 %, with respect to the surface area of the cathode 10.

Referring to FIG. 5, the surface area of the cathode 10 may be smaller than the surface area of the anode current collector 21. For example, the surface area of the cathode 10 may be less than 100 %, less than 99 %, less than 98 %, less than 97 %, less than 96 %, or less than 95 %, with respect to the surface area of the anode current collector 21. For example, the surface area of the cathode 10 may be less than 50 % to 100 %, about 50 % to about 99 %, about 55 % to about 98 %, about 60 % to about 97 %, about 70 % to about 96 %, about 80 % to about 95 %, or about 85 % to about 95 %, with respect to the surface area of the anode current collector 21. For example, the surface area of the anode current collector 21 may be equal to the surface area of the anode 20. For example, the surface area of the anode current collector 21 may be equal to the surface area of the first anode active material layer 22.

As utilized herein, the terms "identical" and/or "same" with respect to area, length, width, thickness, and/or shape or form, unless otherwise indicated that the area, length, width, thickness, and/or shape or form are deliberately varied to differ from each other, may include "substantially identical" and "substantially the same" area, length, width, thickness, and/or shape or form. For example, the "identical" and/or "same" area, length, width, thickness, and/or shape or form may include instances where an unintended (or unintentional) difference in the area, length, width, thickness, and/or shape or form is within a range of less than 3 %, less than 2 %, less than 1 %, less than 0.5 %, or less than 0.1 %.

For example, the thickness of the inactive member 40 may be more (e.g., larger) than the thickness of the first anode active material layer 22. For example, the thickness of the first anode active material layer 22 may be 50 % or less, 40 % or less, 30 % or less, 20 % or less, or 10 % or less with respect to the thickness of the inactive member 40. For example, the thickness of the first anode active material layer 22 may be about 1 % to about 50 %, about 1 % to about 40 %, about 1 % to about 30 %, about 1 % to about 20 %, or about 1 % to about 10 % with respect to the thickness of the inactive member 40.

The inactive member 40 may be, for example, a gasket. Using a gasket as the inactive member 40 may effectively or suitably inhibit or reduce crack formation in the electrolyte layer 30 due to a pressure differential during the press process.

For example, the inactive member 40 may have a monolayer structure. In other embodiments, the inactive member 40 may have a multilayer structure. In the inactive member 40 having a multilayer structure, each layer may have a different composition. The inactive member 40 having a multilayer structure may have, for example, a two-layer structure, a three-layer structure, a four-layer structure, or a five-layer structure. The inactive member 40 having a multilayer structure may include, for example, one or more adhesive layers and one or more support layers. For example, the adhesive layers may effectively or suitably prevent or reduce separation between the cathode 10 and the electrolyte layer 30 due to volume changes of the cathode 10 that occur during charging and discharging of the cathode 10 and may improve a film strength of the inactive member 40 by providing adhesion between the support layer and other layers. The support layer may provide support to the inactive member 40, prevent or reduce non-uniformity of the pressure exerted on the electrolyte layer 30 during the press process or charging and discharging processes, and prevent or reduce deformations in shape of the solid secondary battery 1 being produced.

The inactive member 40 may have, for example, a flame-retardant inactive member. Flame retardancy provided by the flame-retardant inactive member may reduce the risk of thermal runaway and explosion of the solid secondary battery 1. Consequently, the safety of the solid secondary battery 1 may further improve. As the flame-retardant inactive member absorbs residual moisture inside the solid secondary battery 1, degradation of the solid secondary battery 1 may be prevented or reduced, improving the lifetime characteristics of the solid secondary battery 1.

The flame-retardant inactive member may include, for example, a matrix and a filler. For example, the matrix may include a substrate and a reinforcing material. For example, the matrix may include a fibrous substrate and a fibrous reinforcing material. As the matrix includes the substrate, the matrix may have elasticity. The matrix may be placed at one or more suitable locations and effectively or suitably accommodate volume changes of the solid secondary battery 1 during charging and discharging. The substrate included in the matrix may include, for example, a first fibrous material. As the substrate includes the first fibrous material, volume changes of the cathode 30 during charging and discharging of the solid secondary battery 1 may be effectively or suitably accommodated, and deformation of the inactive member 40 caused by volume changes of the cathode 30 may be effectively or suitably suppressed or reduced. For example, the first fibrous material may be a material having an aspect ratio of 2 or more, 5 or more, 20 or more, or 50 or more. For example, the first fibrous material may be a material having an aspect ratio of about 5 to about 1,000, about 20 to about 1,000, or about 50 to about 1,000. For example, the first fibrous material may be an insulating material. Because the first fibrous material is an insulating material, a short circuit that may occur between the cathode 30 and the anode 20 due to lithium dendrites and/or the like during charging and discharging of the solid secondary battery 1 may be effectively or suitably prevented or reduced. Examples of the first fibrous material may include at least one selected from among pulp fibers, insulating polymer fibers, and ionically conductive polymer fibers. As the matrix includes the reinforcing material, strength of the matrix may improve. The matrix may serve to prevent or reduce the solid secondary battery 1 from undergoing an excessive or unsuitable volume change during charging and discharging and protect the solid secondary battery 1 from deformation. The reinforcing material included in the matrix may include, for example, a second fibrous material. As the reinforcing material includes the second fibrous material, a more substantially uniform increase of the strength of the matrix may be achieved. For example, the second fibrous material may be a material having an aspect ratio of 2 or more, 3 or more, 5 or more, or 10 or more. For example, the first fibrous material may be a material having an aspect ratio of about 2 to about 100, about 3 to about 100, about 5 to about 100, or about 10 to about 100. For example, the second fibrous material may be a flame-retardant material. Because the second fibrous material is a flame-retardant material, a fire caused by thermal runaway during charging and discharging of the solid secondary battery 1 or by an external impact may be effectively or suitably suppressed or reduced. For example, the second fibrous material may be glass fibers, metal oxide fibers, ceramic fibers, and/or the like.

The flame-retardant inactive member may include a filler in addition to the matrix. The filler may be provided inside the matrix, may be provided on a surface of the matrix, or may be provided both (e.g., simultaneously) inside and on a surface of the matrix. Examples of the filler may include an inorganic material. The filler included in the flame-retardant inactive member may be for example, a moisture getter. For example, the filler may remove residual moisture from the solid secondary battery 1 by adsorbing to moisture at a temperature of less than 100 °C, thereby preventing or reducing degradation of the solid secondary battery 1. Further, if the temperature of the solid secondary battery 1 increases to 150 °C or higher due to thermal runaway caused by an external impact, or during charging and discharging of the solid secondary battery 1, the filler may release the adsorbed moisture to effectively or suitably prevent or reduce the risk of the solid secondary battery 1 catching fire. For example, the filer may be a flame retardant. For example, the filler may be a metal hydroxide having hygroscopicity. The metal hydroxide included in the filler may be, for example, $Mg(OH)_2$, $Fe(OH)_3$, $Sb(OH)_3$, $Sn(OH)_4$, $Ti(OH)_3$, $Zr(OH)_4$, $Al(OH)_3$, or a combination thereof. The amount of the filler included in the flame-retardant inactive member may be, for example, about 10 parts by weight to about 80 parts by weight, about 20 parts by weight to about 80 parts by weight, about 30 parts by weight to about 80 parts by weight, about 40 parts by weight to about 80 parts by weight, about 50 parts by weight to about 80 parts by weight, about 60 parts by weight to about 80 parts by weight, or about 65 parts by weight to about 80 parts by weight, with respect to 100 parts by weight of a flame-retardant inactive member.

The flame-retardant inactive member may include a binder, for example. The binder may include, for example, a curable polymer or a non-curable polymer. The curable polymer may be a polymer that cures by heat and/or pressure. For example, the curable polymer may be solid at room temperature. The flame-retardant inactive member (e.g., the inactive member 40) may include, for example, a thermal-press curable film and/or a cured product thereof. The thermal-press curable film may be TSA-66 by Toray Industries, for example.

In addition, to the substrate, the reinforcing material, the filler, and the binder described above, the flame-retardant inactive member may further include other suitable materials. For example, the flame-retardant inactive member may further include at least one selected from among paper, an insulating polymer, an ionically conductive polymer, an insulating inorganic material, an oxide-based solid electrolyte, and a sulfide-based solid electrolyte. The insulating polymer may be an olefin-based polymer such as polypropylene (PP), polyethylene (PE), and/or the like.

The substrate or the reinforcing material included in the flame-retardant inactive member may have a density of, for example, about 10 % to about 300 %, about 10 % to about 150 %, about 10 % to about 140 %, about 10 % to about 130 %, or about 10 % to about 120 %, relative to the density of the cathode active material included in a cathode active material layer 12.

The inactive member 40 may be a member not containing any suitable material with electrochemical activity, e.g., electrode active material. The electrode active material may be a material that absorbs/desorbs lithium. The inactive member 40 may be a member composed of a suitable material available in the art, that is not an electrode active material.

**Solid Secondary Battery**

A solid secondary battery according to one or more embodiments may include the cathode layer; the anode layer, and the electrolyte layer provided between the cathode layer and the anode layer. The anode layer may include an anode current collector and a first anode active material layer provided on one side of the anode current collector.

The anode layer may include an anode current collector and a lithium host layer provided on one side of the anode current collector, wherein the lithium host layer may include a lithium host structure, the lithium host structure may include one or more lithium hosts, the lithium hosts may include a carbon-based lithium host, a metal-based lithium host, a polymer-based lithium host, or a combination thereof, and the anode layer may include a first inactive member provided on one side surface of the anode layer.

On the inside and/or surface of the lithium host layer, a lithium plated layer may be formed.

The solid secondary battery may include, as a cathode active material, a lithium-containing sulfide-based cathode active material. In some embodiments, blocking of ion and/or electron transport paths due to volume expansions of a lithium-free sulfide-based cathode active material, e.g., sulfur (S), during initial discharging, may be prevented or reduced. By preventing or reducing such blocking of ion and/or electron transport paths, cycling performance of the solid secondary battery may improve.

Because the solid secondary battery includes the lithium host layer on the anode layer, the lithium hosts act as a support while lithium metal is plated on the anode layer, and therefore, non-uniformity of lithium plating may be reduced or suppressed. During charging and discharging of the solid secondary battery, formation and growth of lithium dendrites and/or dead lithium may be reduced or suppressed. As a result, degradation of the solid secondary battery may be prevented or reduced, and cycling performance of the solid secondary battery may improve.

Because the solid secondary battery includes the lithium host layers on the anode layer, drastic volume changes of the anode layer during charging and discharging of the solid secondary battery may be reduced or suppressed. Because drastic volume changes of the anode layer are reduced or suppressed, during charging and discharging of the solid secondary battery, degradations of the solid secondary battery due to volume changes of the solid secondary battery may be reduced or suppressed, and the cycling performance of the solid secondary battery may improve.

Inclusion of the solid electrolyte layer in the solid secondary battery may prevent or reduce the migration of polysulfides to the anode layer that occurs during charging and discharging of the lithium-containing sulfide-based cathode active material. As a result, side reactions between polysulfides and an anode active material may be inhibited or reduced.

Because the inactive member is provided on one side surface of the anode layer, it may be possible to more effectively or suitably suppress or reduce, during charging and discharging of the solid secondary battery, the formation and growth of lithium dendrites and/or short circuits between the cathode and lithium metal that melts at high temperatures. As a result, short-circuits in the solid secondary battery may be prevented or reduced, and lifetime characteristics of the solid secondary battery may improve.

Referring to FIGS. 2 to 6, a solid secondary battery 1 may include a cathode layer 10; an anode layer 20; and an electrolyte layer 30 provided between the cathode layer 10 and the anode layer 20. The anode layer 20 may include an anode current collector 21 and a first anode active material layer 22 provided on one side of the anode current collector 21.

**Anode**

**Anode: Anode Active Material**

Referring to FIGS. 3 to 6, an anode 20 may include a first anode active material layer 22. The first anode active material layer 22 may include, for example, an anode active material and a binder.

The anode active material included in the first anode active material layer 22 may be, for example, an anode material capable of forming an alloy and/or a compound with lithium.

The anode active material included in the first anode active material layer 22 may have, for example, a particulate form. The anode active material having a particulate form may have an average particle diameter of, for example, 4 $\mu$m or less, 3 $\mu$m or less, 2 $\mu$m or less, 1 $\mu$m or less, 500 nm or less, 300 nm or less, or 100 nm or less. For example, the anode active material having a particulate form may have an average particle diameter of about 10 nm to about 4 $\mu$m, about 10 nm to about 3 $\mu$m, about 10 nm to about 2 $\mu$m, about 10 nm to about 1 $\mu$m, about 10 nm to about 500 nm, about 10 nm to about 300 nm, or about 10 nm to about 100 nm. The anode active material having an average particle diameter within any of the above ranges may facilitate reversible absorption and/or desorption of lithium during charging/discharging. The average particle diameter of the anode active material may be, for example, a median particle diameter (D50) as measured by a laser-type or kind particle size distribution analyzer.

The anode active material included in the first anode active material layer 22 may include, for example, at least one selected from a carbonaceous anode active material and a metal and/or metalloid anode active material.

The carbonaceous anode active material may include, for example, amorphous carbon, crystalline carbon, porous carbon, or a combination thereof.

The carbonaceous anode active material may be, for example, an amorphous carbon. Examples of the amorphous carbon may include carbon black (CB), acetylene black (AB), furnace black (FB), Ketjen black (KB), graphene, and/or the like; however, the carbonaceous anode active material is not necessarily limited to the aforementioned examples and may be any suitable material categorized as (or akin to) amorphous carbon in the art. Amorphous carbon is carbon with no crystalline structure or an extremely low degree of crystallinity and as such, may be distinguished from crystalline carbon and/or graphitic carbon.

The carbonaceous anode active material may be porous carbon, for example. For example, pores included in the porous carbon may have a pore volume of about 0.1 cc/g to about 10.0 cc/g, about 0.5 cc/g to about 5 cc/g, or about 0.1 cc/g to about 1 cc/g. For example, pores included in the porous carbon may have an average pore diameter of about 1 nm to about 50 nm, about 1 nm to about 30 nm, or about 1 nm to about 10 nm. The BET (Brunauer, Emmett and Teller) specific surface of the porous carbon may be, for example, about 100 m$^2$/g to about 3,000 m$^2$/g.

The metal and/or metalloid anode active material may include at least one selected from among gold (Au), platinum (Pt), palladium (Pd), silicon (Si), silver (Ag), aluminum (Al), bismuth (Bi), tin (Sn), and zinc (Zn), but is not necessarily limited to the aforementioned materials. The metal and/or metalloid anode active material may be any suitable metal anode active material and/or metalloid anode active material available in the art that can form an alloy or a compound with lithium. For example, nickel (Ni) does not form an alloy with lithium and is therefore not regarded as a metal anode active material.

Among the above anode active materials, the first anode active material layer 22 may include a single anode active material, or may include a mixture of multiple different types (kinds) of anode active materials. For example, the first anode active material layer 22 may include amorphous carbon alone or may include one or more selected from among gold (Au), platinum (Pt), palladium (Pd), silicon (Si), silver (Ag), aluminum (Al), bismuth (Bi), tin (Sn), and zinc (Zn). In some embodiments, the first anode active material layer 22 may include a mixture of amorphous carbon with at least one selected from gold (Au), platinum (Pt), palladium (Pd), silicon (Si), silver (Ag), aluminum (Al), bismuth (Bi), tin (Sn), and zinc (Zn). A mixing ratio of amorphous carbon to the metal(s) described herein, such as gold (Au), in such a mixture may be about 99:1 to about 1:99, about 10:1 to about 1:2, about 5:1 to about 1:1, or about 4:1 to about 2:1 in weight ratio, but without being necessarily limited thereto, may be selected according to required or desired characteristics of the solid secondary battery 1. As the anode active material has the above compositions, cycling performance of the solid secondary battery 1 may further improve.

The anode active material included in the first anode active material layer 22 may include, for example, a mixture of first particles composed of amorphous carbon, and second particles composed of a metal and/or metalloid. Examples of the metal and/or metalloid may include gold (Au), platinum (Pt), palladium (Pd), silicon (Si), silver (Ag), aluminum (Al), bismuth (Bi), tin (Sn), zinc (Zn), and/or the like. In some embodiments, the metalloid may be a semiconductor. The content (e.g., amount) of the second particles may be about 1 wt% to about 99 wt%, about 1 wt% to about 60 wt%, about 8 wt% to about 60 wt%, about 10 wt% to about 50 wt%, about 15 wt% to about 40 wt%, or about 20 wt% to about 30 wt%, with respect to the total weight of the mixture. As the amount of the second particles is within any of the above ranges, a cycling performance of the solid secondary battery 1 may further improve.

In some embodiments, the first anode active material layer 22 may include a composite anode active material. For example, the composite anode active material may include a carbonaceous support and a metal-based anode active material supported on the carbonaceous support. For example, the composite anode active material may have a structure in which silver (Ag) is supported on carbon particles. With the composite anode active material having the above structure, uneven distribution of the metal-based anode active material within the first anode active material layer may be prevented or reduced, giving rise to a substantially uniform distribution. As a result, the cycling performance of the solid secondary battery 1 including the first anode active material layer 22 may further improve.

Examples of the metal-based anode active material supported on the carbonaceous support may include a metal, a metal oxide, a metal-metal oxide composite, or a combination thereof. The metal may include, for example, gold (Au), platinum (Pt), palladium (Pd), silicon (Si), silver (Ag), aluminum (Al), bismuth (Bi), tin (Sn), tellurium (Te), zinc (Zn), and/or the like. Examples of the metal oxide may include gold (Au) oxide, platinum (Pt) oxide, palladium (Pd) oxide, silicon (Si) oxide, silver (Ag) oxide, aluminum (Al) oxide, bismuth (Bi) oxide, tin (Sn) oxide, tellurium (Te) oxide, zinc (Zn) oxide, and/or the like. For example, the metal oxide may include $Au_xO_y$ ($0<x\leq2$, $0<y\leq3$), $Pt_xO_y$ ($0<x\leq1$, $0<y\leq2$), $Pd_xO_y$ ($0<x\leq1$, $0<y\leq1$), $Si_xO_y$ ($0<x\leq1$, $0<y\leq2$), $Ag_xO_y$ ($0<x\leq2$, $0<y\leq1$), $Al_xO_y$ ($0<x\leq2$, $0<y\leq3$), $Bi_xO_y$ ($0<x\leq2$, $0<y\leq3$), $Sn_xO_y$ ($0<x\leq1$, $0<y\leq2$), $Te_xO_y$ ($0<x\leq1$, $0<y\leq3$), $Zn_xO_y$ ($0<x\leq1$, $0<y\leq1$), or a combination thereof. Examples of the metal-metal oxide composite may include a composite of Au and $Au_xO_y$ ($0<x\leq2$, $0<y\leq3$), a composite of Pt and $Pt_xO_y$ ($0<x\leq1$, $0<y\leq2$), a composite of Pd and $Pd_xO_y$ ($0<x\leq1$, $0<y\leq1$), a composite of Si and $Si_xO_y$ ($0<x\leq1$, $0<y\leq2$), a composite of Ag and $Ag_xO_y$ ($0<x\leq2$, $0<y\leq1$), a composite of Al and $Al_xO_y$ ($0<x\leq2$, $0<y\leq3$), a composite of Bi and $Bi_xO_y$ ($0<x\leq2$, $0<y\leq3$), a composite of Sn and $Sn_xO_y$ ($0<x\leq1$, $0<y\leq2$), a composite of Te and $Te_xO_y$ ($0<x\leq1$, $0<y\leq3$), a composite of Zn and $Zn_xO_y$ ($0<x\leq1$, $0<y\leq1$), or a combination thereof.

The carbonaceous support may be, for example, an amorphous carbon. Examples of the amorphous carbon may include carbon black (CB), acetylene black (AB), furnace black (FB), Ketjen black (KB), graphene, activated carbon, carbon nanofibers (CNFs), carbon nanotubes (CNTs), and/or the like. However, the amorphous carbon is not necessarily limited to the aforementioned examples but may be any suitable material classified as (e.g., akin to) amorphous carbon in the art. Amorphous carbon is carbon with no crystalline structure or an extremely low degree of crystallinity and as such, may be distinguished from crystalline carbon and/or graphitic carbon. The carbonaceous material may be, for example, a carbonaceous anode active material.

The composite anode active material may have, for example, a particulate form (in the form of particles). The particle diameter (e.g., average particle diameter) of the composite anode active material having a particulate form may be, for example, from about 10 nm to about 4 μm, about 10 nm to about 1 μm, about 10 nm to about 500 nm, about 10 nm to about 200 nm, or about 10 nm to about 100 nm. If the composite anode active material has a particle diameter (e.g., average particle diameter) within any of the above ranges, reversible absorption and/or desorption of lithium during charging and discharging may be further facilitated. The metal-based anode active material supported on the support may have, for example, a particulate form. For example, the metal-based anode active material may have a particle diameter (e.g., average particle diameter) of about 1 nm to about 200 nm, about 1 nm to about 150 nm, about 5 nm to about 100 nm, or about 10 nm to about 50 nm. For example, the carbonaceous support may have a particulate form. For example, the carbonaceous support may have a particle diameter (e.g., average particle diameter) of about 10 nm to about 2 μm, about 10 nm to about 1 μm, about 10 nm to about 500 nm, about 10 nm to about 200 nm, or about 10 nm to about 100 nm. With the carbonaceous support having a particle diameter (e.g., average particle diameter) in any of the above ranges, a more substantially uniform distribution within the first anode active material layer may be achieved. For example, the carbonaceous support may be nanoparticles having a particle diameter of 500 nm or less. The particle diameter (e.g., average particle diameter) of the composite anode active material, the particle diameter of the metal-based anode active material, and the particle diameter of the carbonaceous support may be, for example, an average particle diameter. The average particle diameter may be, for example, a median particle diameter (D50) as measured by a laser-type or kind particle size distribution analyzer. In some embodiments, the average particle diameter may be automatically determined utilizing a software, or manually determined utilizing a manual, from an electron microscope image.

**Anode: Binder**

The binder included in the first anode active material layer 22 may be, for example, styrene butadiene rubber (SBR), polytetrafluoroethylene, polyvinylidene fluoride, polyethylene, a vinylidene fluoride/hexafluoropropylene copolymer, polyacrylonitrile, polymethylmethacrylate, and/or the like. However, the binder is not necessarily limited to the aforementioned examples and may be any suitable material available as a binder in the art. The binder may be composed of a single type or kind of binder, or multiple binders of different types (kinds).

As the first anode active material layer 22 may include a binder, the first anode active material layer 22 may be stabilized on the anode current collector 21. Further, crack formation in the first anode active material layer 22 may be suppressed or reduced, despite volume changes and/or displacement of the first anode active material layer 22 during charging and discharging processes. For example, if the first anode active material layer 22 does not contain any binder, the first anode active material layer 22 may be relatively easily delaminated from the anode current collector 21. At an area where the anode current collector 21 is exposed as a result of delamination of the first anode active material layer 22 from the anode current collector 21, the anode current collector 21 may come in contact with the electrolyte layer 30, thus increasing the likelihood of a short circuit. For example, the first anode active material layer 22 may be prepared by applying and drying a slurry having dispersed therein materials forming the first anode active material layer 22 on the anode current collector 21. By including a binder in the first anode active material layer 22, stable dispersion of the anode active materials within the slurry may be achieved. For example, if applying the slurry onto the anode current collector 21 by a screen-printing method, it may be possible to prevent or reduce the screen from clogging (for example, clogging by agglomerates of the anode active material).

**Anode: Other Additives**

The first anode active material layer 22 may further include other additives utilized in a solid secondary battery, such as a filler, a coating agent, a dispersing agent, an ionically conductive aid, and/or the like.

**Anode: Solid Electrolyte**

The first anode active material layer 22 may further include a solid electrolyte. The solid electrolyte may be, for example, a material selected from solid electrolytes included in the electrolyte layer 30. The solid electrolyte included in the first anode active material layer 22 may act as a reaction point where formation of lithium metal starts, may act as a space where the formed lithium metal is stored, and/or may act as a route for transferring lithium ions in the first anode active material layer 22. In some embodiments, the solid electrolyte may not be provided.

For example, in the first anode active material layer 22, the concentration of the solid electrolyte may be high in a region adjacent to the electrolyte layer 30 and low in a region adjacent to the anode current collector 21. For example, the solid electrolyte in the first anode active material layer 22 may have a concentration gradient in which the concentration gradually decreases from a region adjacent to the electrolyte layer 30 to a region adjacent to the anode current collector 21.

**Anode: First Anode Active Material Layer**

The ratio B/A of initial charge capacity B of the first anode active material layer 22 to initial charge capacity A of the cathode active material layer may be about 0.005 to about 0.45. The initial charge capacity of the cathode active material layer 12 may be determined at a maximum charging voltage vs. $Li/Li^+$ from a first open circuit voltage. The initial charge capacity of the first anode active material layer 22 may be determined at 0.01 V vs. $Li/Li^+$ from a second open circuit voltage.

The maximum charging voltage may be determined by the type or kind of the cathode active material. The maximum charging voltage may be, for example, 1.5 V, 2.0 V, 2.5 V, 3.0 V, 3.5 V, 4.0 V, 4.2 V, or 4.3 V. For example, the maximum charging voltage of $Li_2S$ or a $Li_2S$ composite may be 2.5 V vs. $Li/Li^+$. For example, the maximum charging voltage of $Li_2S$ or a $Li_2S$ composite may be 3.0 V vs. $Li/Li^+$. The ratio B/A of initial charge capacity B of the first anode active material layer 22 to initial charge capacity A of the cathode active material layer may be, for example, about 0.01 to about 0.3, about 0.01 to about 0.2, or about 0.05 to about 0.1. The initial charge capacity (mAh) of the cathode active material layer 12 may be obtained by multiplying the charge specific capacity (mAh/g) of the cathode active material layer 12 by the mass (g) of a cathode active material in the cathode active material layer 12. If multiple types (kinds) of cathode active materials are utilized, the product of charge specific density $\times$ mass may be calculated for each cathode active material, and the sum of these products may be defined as the initial charge capacity of the cathode active material layer 12. The initial charge capacity of the first anode active material layer 22 may also be calculated in substantially the same manner. The initial charge capacity of the first anode active material layer 22 may be obtained by multiplying the charge specific density (mAh/g) of an anode active material by the mass of the anode active material in the first anode active material layer 22. If multiple types (kinds) of anode active materials are utilized, the product of charge specific density $\times$ mass may be calculated for each anode active material, and the sum of these products may be defined as the initial charge capacity of the first anode active material layer 22. The charge specific density of each of the cathode active material and the anode active material may be measured utilizing a solid half cell utilizing lithium metal as a counter electrode. The initial charge capacity of each of the cathode active material layer 12 and the first anode active material layer 22 may be directly measured by utilizing a solid half-cell at a constant current density, for example, 0.1 mA/cm$^2$. For the cathode, this measurement may be made for an operating voltage from a 1$^{st}$ open circuit voltage (OCV) to a maximum charge voltage, for example, 3.0 V (vs. $Li/Li^+$). For the anode, this measurement may be made for an operating voltage from a second OCV to 0.01 V with respect to the anode, for example, lithium metal. For example, the solid half-cell having the cathode active material layer may be charged with a constant current of 0.1 mA/cm$^2$ to 3.0 V from the 1$^{st}$ OCV, and the solid half-cell having the first anode active material layer may be charged with a constant current of 0.1 mA/cm$^2$ to 0.01 V from the second OCV. For example, the current density during the constant current charging may be 0.2 mA/cm$^2$ or 0.5 mA/cm$^2$. The solid half cell having the cathode active material layer may be charged, for example, to 2.5 V, 2.0 V, 3.5 V, or 4.0 V from the first OCV. The maximum charge voltage of the cathode active material layer may be determined according to the maximum voltage of a cell that satisfies the safety conditions described in JISC8712:2015 by Japanese Standards Association, the entire content of which is incorporated herein by reference.

If the initial charge capacity of the first anode active material layer 22 is excessively or unsuitably small, the thickness (e.g., average thickness) of the first anode active material layer 22 becomes extremely or unsuitably small, and as a result, lithium dendrites formed between the first anode active material layer 22 and the anode current collector 21 during repeated charging/discharging processes may cause collapse of the first anode active material layer 22, thus making it difficult to improve cycling performance of the solid secondary battery 1. If the charge capacity of the first anode active material layer 22 is excessively or unsuitably large, the energy density of the solid secondary battery 1 may decrease, and the internal resistance of the solid secondary battery 1 by the first anode active material layer 22 may increase, thus making it difficult to achieve improved cycling performance of the solid secondary battery 1.

For example, the first anode active material layer 22 may have a thickness (average thickness) of 50 % or less, 40 % or less, 30 % or less, 20 % or less, 10 % or less, or 5 % or less, with respect to the thickness (average thickness) of the cathode active material layer 12. For example, the first anode active material layer 22 may have a thickness of about 1 % to about 50 %, about 1 % to about 40 %, about 1 % to about 30 %, about 1 % to about 20 %, about 1 % to about 10 %, or about 1 % to about 5 %, with respect to the thickness of the cathode active material layer 12. For example, the first anode active material layer 22 may have a thickness (average thickness) of about 1 $\mu$m to about 20 $\mu$m, about 2 $\mu$m to about 15 $\mu$m, or about 3 $\mu$m to about 10 $\mu$m. If the first anode active material layer 22 is excessively thin (e.g., smaller than the recited thickness range), lithium dendrites formed between the first anode active material layer 22 and the anode current collector 21 may cause the first anode active material layer 22 to disintegrate, thus making it difficult to achieve improved cycling performance of the solid secondary battery 1. If the first anode active material layer 22 is excessively thick (e.g., larger than the recited thickness range), the energy density of the solid secondary battery 1 may decrease, and the internal resistance of the solid secondary battery 1 by the first anode active material layer 22 may increase, thus making it difficult to achieve improved cycling performance of the solid secondary battery 1. If the thickness (average thickness) of the first anode active material layer 22 decreases, for example, the initial charge capacity of the first anode active material layer 22 may also decrease.

**Anode: Second Anode Active Material Layer**

Referring to FIG. 4, the solid secondary battery 1 may further include, for example, a second anode active material layer 24 that is provided between the anode current collector 21 and the first anode active material layer 22 after charging. The second anode active material layer 24 may be a metal layer including lithium and/or a lithium alloy. The metal layer may include lithium and/or a lithium alloy. As such, the second anode active material layer 24, being a metal layer containing lithium, may serve as a lithium reservoir, for example. The lithium alloy may include, for example, a Li-Al alloy, a Li-Sn alloy, a Li-In alloy, a Li-Ag alloy, a Li-Au alloy, a Li-Zn alloy, a Li-Ge alloy, a Li-Si alloy, and/or the like, but without being limited thereto, may be any suitable material available as a lithium alloy in the art. The second anode active material layer 24 may be composed of one of such alloys, and/or lithium, or may be composed of one or more suitable types (kinds) of such alloys. The second anode active material layer 24 may be, for example, a plated layer. For example, the second anode active material layer 24 may be plated between the first anode active material layer 22 and the anode current collector 21 during a charging process of the solid secondary battery 1.

The second anode active material layer 24 is not limited to any set or particular thickness, but may have a thickness (average thickness) of, for example, about 1 $\mu$m to about 500 $\mu$m, about 1 $\mu$m to about 200 $\mu$m, about 1 $\mu$m to about 150 $\mu$m, about 1 $\mu$m to about 100 $\mu$m, or about 1 $\mu$m to about 50 $\mu$m. If the thickness (average thickness) of the second anode active material layer 24 is excessively small (e.g., outside of the recited range), the second anode active material layer 24 may fail to sufficiently or suitably function as a lithium reservoir. If the thickness (average thickness) of the second anode active material layer 24 is excessively large (e.g., outside of the recited range), the mass and volume of the solid secondary battery 1 increase, and as a result, the cycling performance of the solid secondary battery 1 may be more likely to deteriorate.

In some embodiments, in the solid secondary battery 1, the second anode active material layer 24 may be provided between the anode current collector 21 and the first anode active material layer 22, prior to assembly of the solid secondary battery 1, for example. If the second anode active material layer 24 is to be positioned between the anode current collector 21 and the first anode active material layer 22 prior to assembly of the solid secondary battery 1, the second anode active material layer 24 may be a metal layer containing lithium and thus may act as a lithium reservoir. For example, a lithium foil may be positioned between the anode current collector 21 and the first anode active material layer 22 prior to assembly of the solid secondary battery 1.

If the second anode active material layer 24 is to be plated by charging after assembly of the solid secondary battery 1, the second anode active material layer 24 may not be included at the time of assembly of the solid secondary battery 1, and therefore, the solid secondary battery 1 may have increased energy density. If charging the solid secondary battery 1, the charging may be performed exceeding the charge capacity of the first anode active material layer 22. In some embodiments, the first anode active material layer 22 may be overcharged. At the beginning of the charging, lithium may be absorbed into the first anode active material layer 22. The anode active material included in the first anode active material layer 22 may form an alloy and/or a compound with lithium ions moved from the cathode 10. If charged to exceed the capacity of the first anode active material layer 22, lithium may be plated, for example, on the back side of the first anode active material layer 22, e.g., between the anode current collector 21 and the first anode active material layer 22, and then a metal layer corresponding to the second anode active material layer 24 may be formed by the plated lithium. The second anode active material layer 24 may be a metal layer mainly or substantially composed or made of lithium (e.g., metal lithium). This result may be attributed to the fact that the anode active material included in the first anode active material layer 22 includes a material that forms an alloy or compound with lithium. During discharge, lithium of the first anode active material layer 22 and the second anode active material layer 24, for example, a metal layer, is ionized and migrates toward the cathode 10. Therefore, lithium may be utilized as an anode active material in the solid secondary battery 1. Because the first anode active material layer 22 is coated on the second anode active material layer 24, the first anode active material layer 22 may function as a protective layer for the second anode active material layer 24, for example, a metal layer, while inhibiting or reducing precipitation and growth of lithium dendrites. Therefore, short circuits and capacity fading in the solid secondary battery 1 may be inhibited or reduced, and consequently, cycling performance of the solid secondary battery 1 may improve. Further, if the second anode active material layer 24 is to be provided by charging after assembly of the solid secondary battery 1, the anode 20, for example, the anode current collector 21, the first anode active material layer 22, and the area therebetween, may be a Li-free region free of Li, while the solid secondary battery 1 may be in the initial state or a fully discharged state.

**Anode: Anode Current Collector**

The anode current collector 21 may be formed of a material that does not react (or does not substantially react) with lithium, for example, does not form an alloy or a compound with lithium. Examples of the material forming the anode current collector 21 may include copper (Cu), stainless steel, titanium (Ti), iron (Fe), cobalt (Co), nickel (Ni), and/or the like. However, the material forming the anode current collector 21 is not necessarily limited to the aforementioned materials but may be any suitable material available as an electrode current collector in the art. The anode current collector 21 may be formed of one of the aforementioned metals, an alloy of two or more metals thereof, or a covering material. The anode current collector 21 may be, for example, a plate type or kind or a foil type or kind current collector.

Referring to FIG. 3, the solid secondary battery 1 may further include a thin film 23 containing an element capable of forming an alloy with lithium, on one side of the anode current collector 21. The thin film 23 may be positioned between the anode current collector 21 and the anode active material layer 22. The thin film 23 may include, for example, an element capable of forming an alloy with lithium. Examples of the element capable of forming an alloy with lithium may include gold, silver, zinc, tin, indium, silicon, aluminum, bismuth, and/or the like, but without being limited thereto, any suitable element available in the art that is capable of forming an alloy with lithium may be utilized. The thin film 23 may include (e.g., consist of) one of the aforementioned metals, or may include (e.g., consist of) an alloy of different types (kinds) of metals. In some embodiments, the second anode active material layer 24 may be plated between the thin film 23 and the first anode active material layer 22. As the thin film 23 is provided on the anode current collector 21, the plated form of the second anode active material layer 24 being plated between the thin film 23 and the first anode active material layer 22 may be further flattened, and the cycling performance of the solid secondary battery 1 may further improve.

A thickness of the thin film 23 may be, for example, about 1 nm to about 800 nm, about 10 nm to about 700 nm, about 50 nm to about 600 nm, or about 100 nm to about 500 nm. If the thickness of the thin film 23 is less than 1 nm, it may be difficult to achieve functions attributable to the thin film 23. If the thickness of the thin film 23 is excessively large (e.g., outside of the recited range), it may cause the thin film 23 to absorb lithium by itself, decreasing the amount of lithium precipitated at the anode. As a result, the solid battery may have decreased energy density, and the cycling performance of the solid secondary battery 1 may deteriorate. The thin film 23 may be provided on the anode current collector 21 by a suitable method such as a vacuum deposition method, a sputtering method, and a plating method. However, without being limited to the aforementioned methods, any suitable method available in the art that is capable of forming the thin film 23 may be utilized.

In some embodiments, the anode current collector 21 may include, for example, a base film, and a metal layer provided on one side or both sides of the base film. The base film may include, for example, a polymer. For example, the polymer may be a thermoplastic polymer. For example, the polymer may include polyethylene terephthalate (PET), polyethylene (PE), polypropylene (PP), polybutylene terephthalate (PBT), polyimide (PI), or a combination thereof. The polymer may be an insulating polymer. Because the base film includes an insulating thermoplastic polymer, the base film in the event of a short circuit can get softened and/or liquified, thereby blocking or stopping the battery operation to inhibit or reduce the risk of a rapid increase in electric current. In one or more embodiments, the metal layer may include copper (Cu), stainless steel, titanium (Ti), iron (Fe), cobalt (Co), nickel (Ni), or an alloy thereof. The anode current collector 21 may further include a metal piece and/or a lead-tab. For more details of the base film, the metal layer, the metal chip, and the lead-tab of the anode current collector 21, refer to the cathode current collector 11 described above. With the anode current collector 21 having such a structure, the weight of the electrode may be reduced, and as a result, the energy density of the solid secondary battery may improve.

**Electrolyte Layer**

**Electrolyte Layer: Electrolyte**

Referring to FIGS. 1 to 6, the electrolyte layer 30 may include an electrolyte provided between the cathode 10 and the anode 20. The electrolyte may include, for example, a solid electrolyte, a gel electrolyte, or a combination thereof.

Examples of the solid electrolyte may include a sulfide-based solid electrolyte, an oxide-based solid electrolyte, a polymer solid electrolyte, or a combination thereof.

The solid electrolyte may be, for example, a sulfide-based solid electrolyte. The sulfide-based solid electrolyte may be, for example, at least one selected from among $Li_2S$-$P_2S_5$ and $Li_2S$-$P_2S_5$-LiX, wherein X is a halogen element; $Li_2S$-$P_2S_5$-$Li_2O$, $Li_2S$-$P_2S_5$-$Li_2O$-LiI, $Li_2S$-$SiS_2$, $Li_2S$-$SiS_2$-LiI, $Li_2S$-$SiS_2$-LiBr, $Li_2S$-$SiS_2$-LiCl, $Li_2S$-$SiS_2$-$B_2S_3$-LiI, $Li_2S$-$SiS_2$-$P_2S_5$-LiI, $Li_2S$-$B_2S_3$, and $Li_2S$-$P_2S_5$-$Z_mS_n$, wherein m and n each are a positive number, and Z is Ge, Zn or Ga; $Li_2S$-$GeS_2$, $Li_2S$-$SiS_2$-$Li_3PO_4$, and $Li_2S$-$SiS_2$-$Li_pMO_q$, wherein p and q each are a positive number and M is P, Si, Ge, B, Al, Ga or In; $Li_{7-x}PS_{6-x}Cl_x$, wherein $0 \leq x \leq 2$; $Li_{7-x}PS_{6-x}Br_x$, wherein $0 \leq x \leq 2$; and $Li_{7-x}PS_{6-x}I_x$, wherein $0 \leq x \leq 2$. The sulfide-based solid electrolyte may be prepared by treating starting materials, such as $Li_2S$ and/or $P_2S_5$, by a method such as melt-quenching, mechanical milling, and/or the like. Following such a treatment, heat treatment may be conducted. The sulfide-based solid electrolyte may be amorphous or crystalline, or may be in a mixed state thereof. In some embodiments, the solid electrolyte may be, among the sulfide-based solid electrolyte materials described herein, a material that contains at least sulfur (S), phosphorus (P), and lithium (Li), as its constitutive elements. For example, the solid electrolyte may be a material including $Li_2S$-$P_2S_5$. If a sulfide-based solid electrolyte material utilized to form the solid electrolyte contains $Li_2S$-$P_2S_5$, the mixing molar ratio of $Li_2S : P_2S_5$ may be in a range of, for example, about 20:80 to about 90:10, about 25:75 to about 90:10, about 30:70 to about 70: 30, or about 40: 60 to about 60: 40.

For example, the sulfide-based solid electrolyte may include an argyrodite-type or kind solid electrolyte represented by Formula 1:

$$\text{Formula 1} \qquad Li^+_{12-n-x}A^{n+}X^{2-}_{6-x}Y^-_x.$$

In Formula 1, A may be P, As, Ge, Ga, Sb, Si, Sn, Al, In, Ti, V, Nb, or Ta; X may be S, Se, or Te; Y may be Cl, Br, I, F, CN, OCN, SCN, or $N_3$; and $1 \leq n \leq 5$ and $0 \leq x \leq 2$ may be satisfied. For example, the sulfide-based solid electrolyte may be an argyrodite-type or kind compound including one or more selected from among $Li_{7-x}PS_{6-x}Cl_x$ wherein $0 \leq x \leq 2$, $Li_{7-x}PS_{6-x}Br_x$ wherein $0 \leq x \leq 2$, and $Li_{7-x}PS_{6-x}I_x$ wherein $0 \leq x \leq 2$. For example, the sulfide-based solid electrolyte may be an argyrodite-type or kind compound including at least one selected from among $Li_6PS_5Cl$, $Li_6PS_5Br$, and $Li_6PS_5I$.

An argyrodite-type or kind solid electrolyte may have a density of about 1.5 g/cc to about 2.0 g/cc. As the argyrodite-type or kind solid electrolyte has a density of 1.5 g/cc or more, internal resistance of the solid secondary battery may be reduced, and Li penetration to the electrolyte layer may be more effectively or suitably suppressed or reduced.

For example, the oxide-based all-solid electrolyte may be $Li_{1+x+y}Al_xTi_{2-x}Si_yP_{3-y}O_{12}$ ($0<x<2$ and $0 \leq y<3$), $BaTiO_3$, $Pb(Zr,Ti)O_3$(PZT), $Pb_{1-x}La_xZr_{1-y} Ti_yO_3$(PLZT) ($0 \leq X<1$ and $0 \leq y<1$), $PB(Mg_3Nb_{2/3})O_3$-$PbTiO_3$(PMN-PT), $HfO_2$, $SrTiO_3$, $SnO_2$, $CeO_2$, $Na_2O$, $MgO$, $NiO$, $CaO$, $BaO$, $ZnO$, $ZrO_2$, $Y_2O_3$, $Al_2O_3$, $TiO_2$, $SiO_2$, $Li_3PO_4$, $Li_xTi_y(PO_4)_3$ ($0<x<2$ and $0<y<3$), $Li_xAl_yTi_z(PO_4)_3$ ($0<x<2$, $0<y<1$, and $0<z<3$), $Li_{1+x+y}(Al, Ga)_x(Ti, Ge)_{2-x}Si_yP_{3-y}O_{12}$ ($0 \leq x \leq 1$ and $0 \leq y \leq 1$), $Li_xLa_yTiO_3$ ($0<x<2$ and $0<y<3$), $Li_2O$, $LiOH$, $Li_2CO_3$, $LiAlO_2$, $Li_2O$-$Al_2O_3$-$SiO_2$-$P_2O_5$-$TiO_2$-$GeO_2$, $Li_{3+x}La_3M_2O_{12}$ (M = Te, Nb, or Zr, and $0 \leq x \leq 10$), or a combination thereof. The oxide-based solid electrolyte is produced, for example, by a sintering method and/or the like.

For example, the oxide-based solid electrolyte may be a garnet-type or kind solid electrolyte selected from among $Li_7La_3Zr_2O_{12}$ (LLZO) and $Li_{3+x}La_3Zr_{2-a}M_aO_{12}$ (M-doped LLZO, M=Ga, W, Nb, Ta, or Al, and $0<a<2$ and $0 \leq x \leq 10$).

For example, the polymer solid electrolyte may include a mixture of a lithium salt and a polymer, or may include a polymer having an ionically-conductive functional group. For example, the polymer solid electrolyte may be a polymer electrolyte that is in a solid state at 25 °C and 1 atm. For example, the polymer solid electrolyte may not contain liquid. The polymer solid electrolyte may include a polymer, and the polymer may be, for example, polyethylene oxide (PEO), polyvinylidene fluoride (PVDF), vinylidene fluoride-hexafluoropropylene (PVDF-HFP), a poly(styrene-b-ethylene oxide) block copolymer (PS-PEO), poly(styrene-butadiene), poly(styrene-isoprene-styrene), a poly(styrene-b-divinylbenzene) block copolymer, a poly(styrene-ethylene oxide-styrene) block copolymer, polystyrene sulfonate (PSS), polyvinyl fluoride (PVF), poly(methylmethacrylate) (PMMA), polyethylene glycol (PEG), polyacrylonitrile (PAN), polytetrafluoroethylene (PTFE), polyethylenedioxythiophene (PEDOT), polypyrrole (PPY), polyacrylonitrile (PAN), polyaniline, polyacetylene, Nafion, Aquivion, Flemion, Gore, Aciplex, Morgane ADP, sulfonated poly(ether ether ketone) (SPEEK), sulfonated poly(arylene ether ketone ketone sulfone (SPAEKKS), sulfonated poly(aryl ether ketone (SPAEK), poly[bis(benzimidazobenzisoquinolinones)] (SPBIBI), poly(styrene sulfonate) (PSS), and lithium 9,10-diphenylanthracene-2-sulfonate (DPASLi+), or a combination thereof. However, the polymer is not limited to the aforementioned examples and may be any suitable material utilized in polymer electrolytes in the art. The lithium salt may be any suitable lithium salt available in the art. The lithium salt may be, for example, $LiPF_6$, $LiBF_4$, $LiSbF_6$, $LiAsF_6$, $LiClO_4$, $LiCF_3SO_3$, $Li(CF_3SO_2)_2N$, $LiC_4F_9SO_3$, $LiAlO_2$, $LiAlCl_4$, $LiN(C_xF_{2x+1}SO_2)(C_yF_{2y+1}SO_2)$ (x and y are each an integer of 1 to 20), LiCl, Lil, or a mixture thereof. For example, the polymer included in the polymer solid electrolyte may be a compound containing 10 or more repeating units, 20 or more repeating units, 50 or more repeating units, or 100 or more repeating units. For example, the polymer included in the polymer solid electrolyte may have a weight average molecular weight of 1,000 Dalton or more, 10,000 Dalton or more, 100,000 Dalton or more, or 1,000,000 Dalton or more.

For example, the gel electrolyte may be a polymer gel electrolyte. For example, the gel electrolyte may have a gel state while not containing a polymer.

For example, the polymer gel electrolyte may include a liquid electrolyte and a polymer, and/or an organic solvent and a polymer having an ionically-conductive functional group. For example, the polymer gel electrolyte may be a polymer electrolyte that is in a gel state at 25 °C and 1 atm. For example, the polymer gel electrolyte may have a gel state without containing liquid. The liquid electrolyte utilized in the polymer gel electrolytes may be, for example, a mixture of an ionic liquid, a lithium salt, and an organic solvent; a mixture of a lithium salt and an organic solvent; a mixture of an ionic liquid and an organic solvent; or a mixture of a lithium salt, an ionic liquid, and an organic solvent. The polymer utilized in the polymer gel electrolyte may be selected from among polymers utilized in solid polymer electrolytes. The organic solvent may be selected from among organic solvents utilized in liquid electrolytes. The lithium salt may be selected from among lithium salts utilized in polymer solid electrolytes. The ionic liquid may refer to a room-temperature molten salt or a salt that is in a liquid state at room temperature, which includes (e.g., consists of) ions alone and has a melting point of room temperature or less. For example, the ionic liquid may be at least one selected from among compounds containing: a) at least one cation selected from among ammonium, pyrrolidinium, pyridinium, pyrimidinium, imidazolium, piperidinium, pyrazolium, oxazolium, pyridazinium, phosphonium, sulfonium, triazolium, and a mixture thereof; and b) at least one anion selected from among $BF_4^-$, $PF_6^-$, $AsF_6^-$, $SbF_6^-$, $AlCl_4^-$, $HSO_4^-$, $ClO_4^-$, $CH_3SO_3^-$, $CF_3CO_2^-$, Cl-, Br, I-, $SO_4^{2-}$, $CF_3SO_3^-$, $(FSO_2)_2N^-$, $(C_2F_5SO_2)_2N^-$, $(C_2F_5SO_2)(CF_3SO_2)N^-$, and $(CF_3SO_2)_2N^-$. For example, the polymer solid electrolyte may form a polymer gel electrolyte by being impregnated in a liquid electrolyte in a secondary battery. The polymer gel electrolyte may further include inorganic particles. For example, the polymer included in the polymer gel electrolyte may be a compound containing 10 or more repeating units, 20 or more repeating units, 50 or more repeating units, or 100 or more repeating units. For example, the polymer included in the polymer gel electrolyte may have a weight average molecular weight of 500 Dalton or more, 1,000 Dalton or more, 10,000 Dalton or more, 100,000 Dalton or more, or 1,000,000 Dalton or more.

**Electrolyte Layer: Binder**

The solid electrolyte layer 30 may further include, for example, a binder. Examples of the binder included in the electrolyte layer 30 may include styrene butadiene rubber (SBR), polytetrafluoroethylene, polyvinylidene fluoride, polyethylene, and/or the like. However, the binder is not limited to the aforementioned examples and may be any suitable binder available in the art. The binder in the electrolyte layer 30 may be identical to or different from a binder included in the cathode active material layer 12 and the anode active material layer 22. In some embodiments, the binder may not be provided.

The amount of the binder included in the electrolyte layer 30 may be, about 0 wt% to about 10 wt%, about 0 wt% to about 5 wt%, about 0 wt% to about 3 wt%, about 0 wt% to about 1 wt%, about 0 wt% to about 0.5 wt%, or about 0 wt% to about 0.1 wt%, relative to the total weight of the electrolyte layer 30.

Referring to FIG. 7, the anode layer 20 may include an anode current collector 21 and a lithium host layer 22 provided on one surface of the anode current collector 21. A first inactive member 42 may be provided on one side surface of the anode layer 20.

The first inactive member 42 may be provided on one side surface of the lithium host layer 22, and between a solid electrolyte layer 30 and the anode current collector 21 opposing (e.g., facing) the solid electrolyte layer 30. A first inactive member 42 may not be provided on the side surface of the anode current collector 21. In some embodiments, the first inactive member 42 may be provided on one side surface of each of the anode current collector 21 and the lithium host layer 22. By including the first inactive member 42, a short circuit between the cathode layer 10 and the lithium metal plated on the lithium host layer 22 during charging and discharging of the solid secondary battery 1 may be more effectively or suitably prevented or reduced, improving the cycling performance of the solid secondary battery 1. Because including the first inactive member 42 prevents or reduces the cracking of the solid electrolyte layer 30 during manufacturing and/or during charging and discharging the solid secondary battery 1, the cycling performance of the solid secondary battery 1 may improve. In the solid secondary battery 1 that does not include the first inactive member 42, due to a non-substantially uniform pressure applied to the solid electrolyte layer 30 that is in contact with the anode layer 20 during manufacturing and/or charging and discharging of the solid secondary battery 1, cracks may form in the solid electrolyte layer 30, giving rise to growth of lithium metal, and thus, the likelihood of a short circuit occurring may increase.

Referring to FIGS. 3 and 6, in the solid secondary battery 1, thickness T2 of the first inactive member 42 may be substantially identical to thickness T1 of the lithium host layer 22. Because the sum of the thickness T2 of the first inactive member 42 and the thickness T4 of the anode current collector 21 is substantially identical to the thickness T3 of the anode layer 20, substantially uniform pressure may be applied between the anode layer 20 and the solid electrolyte layer 30, and as the anode layer 20 and the solid electrolyte layer 30 are flush against each other sufficiently or suitably, interfacial resistance between the anode layer 20 and the solid electrolyte layer 30 may decrease. Further, as the solid electrolyte layer 30 is sufficiently or suitably sintered during the press manufacturing process of the solid secondary battery 1, the solid electrolyte layer 30 and the solid secondary battery 1 including the same may have decreased internal resistance.

Hereinbelow, a method of preparing a solid secondary battery according to embodiments is described in more detail.

A solid secondary battery according to embodiments may be prepared by: performing first milling on a composition including $M_2S$ and an alkali metal salt; obtaining a composite by performing second milling on a composition obtained by adding an inorganic electronically-conductive structure and a two-dimensional carbonaceous structure or a fibrous carbonaceous material having an aspect ratio of 2 or more, to a product of the first milling; preparing a composition by adding a binder to the composite and then mixing the same, and preparing a cathode by utilizing the composition; preparing an anode; and disposing (e.g., adding or applying) an electrolyte between the cathode and the anode.

A solid electrolyte may be added to the composition.

The solid electrolyte may be a sulfide-based solid electrolyte. The sulfide-based solid electrolyte may have a size of about 0.1 nm to about 10 $\mu$m, for example, about 100 nm to about 3 $\mu$m.

The sulfide-based solid electrolyte may be at least one selected from among $Li_2S-P_2S_5$ and $Li_2S-P_2S_5-LiX$, wherein X is a halogen element; $Li_2S-P_2S_5-Li_2O$, $Li_2S-P_2S_5-Li_2O-LiI$, $Li_2S-SiS_2$, $Li_2S-SiS_2-LiI$, $Li_2S-SiS_2-LiBr$, $Li_2S-SiS_2-LiCl$, $Li_2S-SiS_2-B_2S_3-LiI$, $Li_2S-SiS_2-P_2S_5-LiI$, $Li_2S-B_2S_3$, and $Li_2S-P_2S_5-Z_mS_n$, wherein m and n each are a positive number, and Z is Ge, Zn or Ga; $Li_2S-GeS_2$, $Li_2S-SiS_2-Li_3PO_4$, and $Li_2S-SiS_2-Li_pMO_q$, wherein p and q each are a positive number and M is P, Si, Ge, B, Al, Ga or In; $Li_{7-x}PS_{6-x}Cl_x$, wherein $0 \leq x \leq 2$; $Li_{7-x}PS_{6-x}Br_x$, wherein $0 \leq x \leq 2$; and $Li_{7-x}PS_{6-x}I_x$, wherein $0 \leq x \leq 2$. In some embodiments, the sulfide-based solid electrolyte may include an argyrodite-type or kind solid electrolyte. In some embodiments, the argyrodite-type or kind solid electrolyte may include at least one selected from among $Li_6PS_5Cl$, $Li_6PS_5Br$, and $Li_6PS_5I$.

In some embodiments, the argyrodite-type or kind solid electrolyte may have a density of about 1.5 g/cc to about 2.0 g/cc.

During the first milling and the second milling, the first milling process may be performed until the size of the $M_2S$ become 100 nm or less, at a rate of about 100 rpm to about 1,000 rpm, or about 300 rpm to about 800 rpm, for a duration of about 1 hour to about 20 hours, or about 5 hours to about 10 hours, for example, for about 10 hours.

The milling duration of the first milling may be controlled or selected such that the size of the $M_2S$ become 100 nm or less, and the milling rpm and milling duration of the second milling may be controlled or selected to be less than that of the first milling. The second milling may be performed for a duration of, for example, about 1 hour to about 7 hours, or about 2 hours to about 5 hours.

In the obtaining of a composite, a carbonaceous material may be further added to the composition. The carbonaceous material may utilize carbon nanofibers, and/or the like.

The present disclosure will be described in greater detail through the following examples and comparative examples. However, it will be understood that the examples are provided only to illustrate the present disclosure and not to be construed as limiting the scope of the present disclosure.

**Preparation of Composite Cathode Active Material**

In the following Examples and Comparative Examples, % refers to wt%, and % of SE refers to the content (e.g., amount) of solid electrolyte utilized for the cathode mixture preparation.

**Example 1: 30 % $Li_2S$ - 20 % LiI - 3.25 % CNF + 3.25 % $MoS_2$ + 42.5 % SE**

**Step (Act) 1**

$Li_2S$ and LiI were mixed in a weight ratio of 30:20. The resulting mixture was mechanically milled utilizing a ball mill, to produce a $Li_2S$-LiI composite. The milling conditions were 10 hours at 25 °C, 600 rpm, in an inert atmosphere.

**Step (Act) 2**

The $Li_2S$-LiI composite, $MoS_2$, and carbon nanofibers (CNFs) were mixed in a weight ratio of 50:3.25:3.25. The mixture was mechanically milled utilizing a ball mill. The milling conditions were an inert atmosphere, 25 °C, 60 rpm for 5 hours. The $Li_2S$-LiI-$MoS_2$-CNF composite was utilized as a composite cathode active material.

The $MoS_2$ has a plate form, and the plate form $MoS_2$ has a length (average length) (X direction) of about 30 $\mu$m, a

thickness (average thickness) (Z direction) of 5 $\mu$m, and a width (average width) (Y direction) of about 15 $\mu$m. The Mohs hardness of $Li_2S$ is 0.6 and the Mohs hardness of LiI is 2.0. Further, 42.5 % SE indicates the amount of the solid electrolytes utilized to prepare the cathode mixtures described. The same applies to Examples and Comparative Examples.

**Example 2: 30 % $Li_2S$ - 20 % LiI - 6.75 % CNF + 0.75 % $MoS_2$ + 42.5 % SE**

A $Li_2S$-LiI-$MoS_2$-CNF composite was prepared following substantially the same process as Example 1-1, except that the mixing weight ratio of the $Li_2S$-LiI composite, $MoS_2$, and carbon nanofibers (CNFs) in Step (Act) 2 was changed to be 50:0.75:6.75.

**Example 3: 30 % $Li_2S$ - 20 % LiI - 0.75 % CNF + 6.75 % $MoS_2$ + 42.5 % SE**

A $Li_2S$-LiI-$MoS_2$-CNF composite was prepared following substantially the same process as Example 1, except that the mixing weight ratio of the $Li_2S$-LiI composite, $MoS_2$, and carbon nanofibers (CNFs) in Step (Act) 2 was changed to be 50:6.75:0.75.

**Example 4: 3 0 % $Li_2S$ - 20 % LiI - 0.375 % $MoS_2$-supported CNF 7.5 % + 42. 5 % SE**

**Step (Act) 1**

$Li_2S$ and LiI were mixed in a weight ratio of 30:20. The resulting mixture was mechanically milled utilizing a ball mill, to produce a $Li_2S$-LiI composite. The milling conditions were for 10 hours at 25 °C, 600 rpm.

**Step (Act) 2**

The $Li_2S$-LiI composite and $MoS_2$-supported CNF were mixed in a weight ratio of 50:7.5. The content (e.g., amount) of $MoS_2$ in the $MoS_2$-supported CNF was 0.375 %.
The $MoS_2$-supported CNF was prepared by a method disclosed in Electrochimica Acta 254 (2017) 172-180, and/or in Applied Surface Science 564 (2021) 150387, both of which are incorporated herein by reference in their entirety. In the $MoS_2$-supported CNF, a chemical bond between Mo in $MoS_2$ and carbon in CNF was formed.
The resulting mixture was mechanically milled utilizing a ball mill, to produce a $Li_2S$-LiI-$TiO_2$ composite. The milling conditions were for 5 hours at 25 °C, 600 rpm. The $Li_2S$-LiI-$MoS_2$ supported CNF composite was utilized as a composite cathode active material.

**Example 5: 30 % $Li_2S$ - 20 % LiI - 3.25 % Graphene + 3.25 % $MoS_2$ + 42.5 % SE**

A composite was prepared following substantially the same process as Example 1, except that graphene was utilized instead of the CNF.
For the graphene, graphene purchased from Adeka Corp., having a thickness of 20 nm, a specific surface area of 19 $m^2$/g, and a diameter of about 5 $\mu$m was utilized.

**Comparative Example 1: $Li_2S$-LiI-CNF, 510 rpm, 10 hr, 2 steps (acts), 20G (KR 2017-0068448 (Tatsumisago), incorporated herein in its entirety)**

**Step (Act) 1**

A first mixture was prepared by mixing $Li_2S$ and LiI in a weight ratio of 30:20. The first mixture was mechanically milled utilizing a ball mill, to produce a $Li_2S$-LiI composite.
The milling conditions were for 10 hours at 25 °C, 510 rpm. The milling energy applied to a sample during milling was 20 G.

**Step (Act) 2**

A second mixture was prepared by mixing a $Li_2S$-LiI composite and carbon nanofiber (CNFs) in a weight ratio of 50:10. The second mixture was mechanically milled utilizing a ball mill, to produce a $Li_2S$-LiI-CNF composite.
The milling conditions were for 10 hours at 25 °C, 510 rpm. The milling energy applied to a sample during milling was 20 G. The $Li_2S$-LiI-CNF composite was utilized as a composite cathode active material.

**Reference Example 1: 30 % Li$_2$S - 20 % LiI - 7.5 % CNT + 42.5 % SE**

**Step (Act) 1**

Li$_2$S and LiI were mixed in a weight ratio of 30:20. The resulting mixture was mechanically milled utilizing a ball mill, to produce a Li$_2$S-LiI composite. The milling conditions were 10 hours at 25 °C, 600 rpm, in an inert atmosphere.

**Step (Act) 2**

A Li$_2$S-LiI composite and CNT were mixed in a weight ratio of 50:7.5. The mixture was mechanically milled utilizing a ball mill. The milling conditions were an inert atmosphere, 25 °C, 60 rpm for 5 hours. The Li$_2$S-LiI-CNT composite was utilized as a composite cathode active material.

**Comparative Example 2: 30 % Li$_2$S-20 % LiI + (3.25 % CNF + 3.25 % MoS$_2$) simple mixing + 42.5 % SE**

A first mixture was prepared by mixing Li$_2$S and LiI in a weight ratio of 30:20. The first mixture was mechanically milled utilizing a ball mill, to produce a Li$_2$S-LiI composite.
The milling conditions were for 10 hours at 25 °C, 600 rpm. The milling energy applied to a sample during milling was 20 G.
The Li$_2$S-LiI composite was simply mixed with 3.25 % CNF and 3.25 % **MoS$_2$** in a mortar.

**Comparative Example 3: 30 % Li$_2$S - 20 % LiI - 7.5 % CNF + 42.5 % SE**

**Step (Act) 1**

A first mixture was prepared by mixing Li$_2$S and LiI in a weight ratio of 30:20. The first mixture was mechanically milled utilizing a ball mill, to produce a Li$_2$S-LiI composite.
The milling conditions were for 10 hours at 25 °C, 600 rpm. The milling energy applied to a sample during milling was 20 G.

**Step (Act) 2**

A second mixture was prepared by mixing a Li$_2$S-LiI composite and carbon nanofiber (CNFs) in a weight ratio of 50:10. The second mixture was mechanically milled utilizing a ball mill, to produce a Li$_2$S-LiI-CNF composite.
The milling conditions were for 10 hours at 25 °C, 600 rpm. The milling energy applied to a sample during milling was 20 G. The Li$_2$S-LiI-CNF composite was utilized as a composite cathode active material.

**Comparative Example 4: Simple blend of 30 % Li$_2$S, 20 % LiI, 3.25 % CNF, and 3.25 % MoS$_2$ + 43.5 % SE**

30 % Li$_2$S, 20 % LiI, 3.25 % CNF, and 3.25 % MoS$_2$ were simply mixed in a mortar.

**Preparation of Cathode and Solid Secondary Battery**

**Example 6**

**Preparation of Cathode**

As a cathode active material, the composite prepared in Example 1 was prepared. As a solid electrolyte, argyrodite-type or kind Li$_6$PS$_5$Cl crystals (D50=3.0 μm, crystalline) were prepared. PTFE was prepared as a binder. These materials were mixed in a weight ratio of composite cathode active material : solid electrolyte : binder = 58.7:42.5:1.2 to prepare a cathode mixture. The cathode mixture was obtained by dry mixing, utilizing a ball mill.
The cathode mixture was placed on one side of a cathode current collector made of an aluminum foil carbon-coated on one side thereof, and was plate-pressed for 10 minutes with a pressure of 200 MPa to produce a cathode in a sheet form. The thickness of the cathode was about 120 μm, and the loading level of the cathode mixture was about 8 mg/cm$^2$. The thickness of the cathode active material layer was about 100 μm, and the thickness of the carbon-coated aluminum foil was about 20 μm. The cathode active material layer and the cathode current collector had the same surface area.

**Preparation of Anode**

As an anode current collector, a 10 $\mu$m-thick SUS (stainless steel) sheet was prepared. As anode active materials, carbon black (CB) having a primary particle diameter of about 30 nm and silver (Ag) particles having an average particle diameter of about 60 nm were prepared.

In a vessel containing 4 grams of mixed powder containing CB and Ag particles in a weight ratio of 3:1, 4 grams of an N-methylpyrrolidone (NMP) solution containing 7 wt% of PVDF binder (#9300, KUREHA) were added to prepare a mixed solution. The prepared mixed solution was stirred while slowly adding NMP to this mixed solution, to produce a slurry. The prepared slurry was applied to the SUS sheet by a bar coater, and dried in open air at 80 °C for 10 minutes, and then vacuum-dried at 40 °C for 10 hours to prepare a laminate. The prepared laminate was cold roll-pressed to flatten the surface thereof, to prepare an anode having the first anode active material layer/anode current collector structure. The thickness of the anode active material layer was about 15 $\mu$m. The first anode active material layer and the anode current collector had the same surface area.

**Preparation of Solid Electrolyte Layer**

In argyrodite-type or kind crystal $Li_6PS_5Cl$ solid electrolyte ($D_{50}$=3.0 $\mu$m, crystalline), 1.5 parts by weight of an acryl-based binder with respect to 98.5 parts by weight of the solid electrolyte was added to prepare a mixture. The prepared mixture was stirred while adding octyl acetate thereto, to prepare a slurry. The prepared slurry was applied onto a 15-$\mu$m thick nonwoven fabric placed on a 75 $\mu$m-thick PET substrate by utilizing a bar coater, and dried in open air at a temperature of 80 °C for 10 minutes to prepare a laminate. The prepared laminate was vacuum-dried at a temperature of 80 °C for 2 hours to produce a solid electrolyte layer.

**Inactive Member**

A slurry obtained by mixing cellulose fibers, glass fibers, aluminum hydroxide ($Al(OH)_3$), an acryl-based binder, and a solvent was molded in the form of a gasket, and then the solvent was removed therefrom to produce a flame-retardant inactive member.

The weight ratio of pulp fibers (cellulose fibers) : glass fibers : aluminum hydroxide ($Al(OH)_3$): acryl-based binder was 20:8:70:2. The thickness of the inactive member was 120 $\mu$m.

Before placing the produced flame-retardant inactive member on the solid electrolyte layer, the flame-retardant inactive member was thermally treated under vacuum at 80 °C for 5 hours to remove moisture and/or the like therefrom.

**Preparation of Solid Secondary Battery**

As shown in FIG. 5, the solid electrolyte layer was provided on the anode layer such that the first anode active material layer is in contact with the solid electrolyte layer, and the cathode was provided on the solid electrolyte layer. A gasket may be provided around the cathode while surrounding the cathode to thereby prepare a laminate. The thickness of the gasket was about 120 $\mu$m. The flame-retardant inactive member was utilized as the gasket. The gasket was provided such that the gasket is in contact with a side surface of the cathode, and the solid electrolyte layer. The cathode was provided in the center portion of the solid electrolyte layer, and the gasket was placed extending to a terminal portion (e.g., edge) of the solid electrolyte layer, while being around (e.g., surrounding) the cathode. The surface area of the cathode was about 90 % of the surface area of the solid electrolyte layer, and the gasket was provided in the entire remaining 10 % of the surface area of the solid electrolyte layer that does not have the cathode provided therein.

The prepared laminate was plate-pressed with a pressure of 500 MPa at 85 °C for 30 minutes. Such a press treatment may sinter the solid electrolyte layer and improve battery performance. The thickness of the sintered solid electrolyte layer was about 45 $\mu$m. The density of the argyrodite-type or kind crystal $Li_6PS_5Cl$ solid electrolyte included in the sintered solid electrolyte layer was 1.6 g/cc. The surface area of the solid electrolyte layer was the same as the surface area of the anode.

The pressed laminate was placed in a pouch and vacuum-sealed to produce a solid secondary battery. A part of the cathode current collector and a part of the anode current collector were extended out of the sealed battery and utilized as a cathode terminal and an anode terminal, respectively.

**Examples 7 to 10**

A cathode and a solid secondary battery were prepared following substantially the same process as Example 6, except that the composite cathode active materials prepared in Examples 2 to 5 were utilized, respectively, instead of the composite cathode active material prepared in Example 1.

**Examples 11 to 15 (Loading level of cathode mixture of about 24 mg/cm$^2$)**

A cathode and a solid secondary battery were prepared following substantially the same process as Examples 6 to 10, except that the loading level of cathode mixture while preparing the cathode was changed to about 24 mg/cm$^2$.

**Comparative Example 5: 30 % Li$_2$S - 20 % LiI - 7.5 % CNF + 42.5 % SE (Loading level of cathode mixture of about 8 mg/cm$^2$)**

A cathode and a solid secondary battery were prepared following substantially the same process as Example 6, except that the composite cathode active material of Comparative Example 1 was utilized.

**Comparative Example 6: 30 % Li$_2$S - 20 % LiI - 7.5 % CNF + 42.5 % SE (Loading level of cathode mixture of about 24 mg/cm$^2$)**

A cathode and a solid secondary battery were prepared following substantially the same process as Comparative Example 5, except that the loading level of cathode mixture while preparing the cathode was changed to about 24 mg/cm$^2$.

**Comparative Example 7: Simple Blend (Loading level of cathode mixture of about 8 mg/cm$^2$)**

A cathode and a solid secondary battery were prepared following substantially the same process as Example 6, except that the composite cathode active material of Comparative Example 2 was utilized.

**Comparative Example 8: Simple Blend (Loading level of cathode mixture of about 24 mg/cm$^2$)**

A cathode and a solid secondary battery were prepared following substantially the same process as Comparative Example 7, except that the loading level of cathode mixture while preparing the cathode was changed to about 24 mg/cm$^2$.

**Reference Example 2: 30 % Li$_2$S - 20 % LiI - 7.5 % CNT + 42.5 % SE (Loading level of cathode mixture of about 8 mg/cm$^2$)**

A cathode and a solid secondary battery were prepared following substantially the same process as Example 6, except that the composite cathode active material of Reference Example 1 was utilized.

**Reference Example 3: 30 % Li$_2$S - 20 % LiI - 7.5 % CNT + 42.5 % SE (Loading level of cathode mixture of about 24 mg/cm$^2$)**

A cathode and a solid secondary battery were prepared following the same process as Reference Example 2, except that the loading level of cathode mixture when preparing the cathode was changed to about 24 mg/cm$^2$.

**Evaluation Example 1: XRD and scanning electron microscopy analysis**

XRD spectra were measured utilizing Cu K$\alpha$ radiation for the composite cathode active materials (i.e., composites) prepared in Examples 1 to 5, Comparative Examples 1 to 4, and Reference Example 1. From the measured XRD spectra, Li$_2$S crystallite sizes calculated from the first peaks appearing at a diffraction angle of $2\theta = 27° \pm 2.0°$, corresponding to the (111) plane, are shown in Table 2. The crystal size was measured utilizing Sherrer Equation.

Using a particle size analyzer (PSA) and a scanning electron microscope utilizing laser, the particle size (D50) of each of Li$_2$S in the composite cathode active materials prepared in Examples 1 to 5, Comparative Examples 1 and 2, and Reference Example 1, was measured. The Li$_2$S particle size of the composite cathode active material is the arithmetic average of the particle sizes of a plurality of Li$_2$S particles measured utilizing software in a scanning electron microscope image. The results of the measurement are shown in Table 1.

Table 1

| Item | Milling in Step (Act) 1 | Milling in Step (Act) 2 | Solid solution formation | Li$_2$S crystallite size [nm] | Li$_2$S particle size [$\mu$m] |
|---|---|---|---|---|---|
| Example 1 | | | | | |

(continued)

| Item | Milling in Step (Act) 1 | Milling in Step (Act) 2 | Solid solution formation | Li$_2$S crystallite size [nm] | Li$_2$S particle size [μm] |
|---|---|---|---|---|---|
| 30 % Li$_2$S - 20 % LiI - (3.25 % CNF + 3.25 % MoS$_2$) + 42.5 % SE | 600 rpm, 28 G, 10 hr | 600 rpm, 28 G, 5 hr | ○ | 9.8 | Less than 1 |
| Example 2<br>30 % Li$_2$S - 20 % LiI - (6.75 % CNF + 0.75 % MoS$_2$) + 42.5 % SE | 600 rpm, 28 G, 10 hr | 600 rpm, 28 G, 5 hr | ○ | 9.9 | Less than 1 |
| Example 3<br>30 % Li$_2$S - 20 % LiI - (0.75 % CNF + 6.75 % MoS$_2$) + 42.5 % SE | 600 rpm, 28 G, 10 hr | 600 rpm, 28 G, 5 hr | ○ | 9.8 | Less than 1 |
| Example 4<br>30 % Li$_2$S - 20 % LiI - (0.375 % MoS$_2$ supported CNF 7.5 %) + 42.5 % SE | 600 rpm, 28 G, 10 hr | 600 rpm, 28 G, 5 hr | ○ | 9.9 | Less than 1 |
| Example 5<br>30 % Li$_2$S - 20 % LiI - (3.25 % Graphene + 3.25 % MoS$_2$) + 42.5 % SE | 600 rpm, 28 G, 10 hr | 600 rpm, 28 G, 5 hr | ○ | 9.9 | Less than 1 |
| Comparative Example 1 (Tatsumisago)<br>30 % Li$_2$S - 20 % LiI - 10% CNF | 600 rpm, 28 G, 10 hr | 600 rpm, 28 G, 10 hr | ○ | 9.8 | Less than 1 |
| Comparative Example 2<br>30 % Li$_2$S - 20 % LiI + (3.25 % CNF + 3.25 % MoS$_2$) simple mixing +42.5 % SE | 600 rpm, 28 G, 10 hr | - | ○ | 17 | 2 |
| Comparative Example 3<br>30% Li$_2$S - 20 % LiI - 7.5 % CNF + 42.5 % SE | 600 rpm, 28 G, 10 hr | 600 rpm, 28 G, 10 hr | ○ | 9.8 | Less than 1 |
| Comparative Example 4<br>30 % Li$_2$S+ 20 % LiI + (3.25 % CNF + 3.25 % MoS$_2$) simple mixing + 42.5 % SE | - | - | X | 64 | 8 |
| Reference Example 1<br>30 % Li$_2$S - 20 % LiI - (3.25 % CNT + 3.25 % MoS$_2$) | 600 rpm, 28 G, 10 hr | 600 rpm, 28 G, 5 hr | ○ | 10.1 | Less than 1 |

In Table 1, SE represents the solid electrolytes utilized to prepare the cathode mixtures described.

As shown in Table 1, it was found that the composites of Examples 1 to 5 include a Li$_2$S-LiI solid solution, a Li$_2$S crystallite size of less than 9.9 nm, and the particle size of Li$_2$S in the composite was 2 μm or less.

As shown in Table 1, it was found that the simple mixture of Li$_2$S, LiI, CNF, and MoS of Comparative Example 4 failed to form a solid solution.

**Evaluation Example 2: XRD Analysis**

XRD spectra were measured utilizing Cu Kα radiation for the composite of Example 1 and the simple mixture of Li$_2$S, LiI, MoS$_2$, and CNFs of Comparative Example 4.

The position of the composite of Example 1 has shifted to a lower angle, compared to the position of the mixture of Comparative Example 4.

The composite of Example 1 shows a slight left shift of peaks at 2Θ=27°±2.0°, indicating the Li$_2$S-LiI solid solution formed, wherein the peaks at 2Θ=27°±2.0° are peaks corresponding to MoS$_2$ (111) peaks. The MoS$_2$ peaks at 2Θ=14.5±0.5°, for example, 14.1°, show extremely or substantially reduced intensity.

In Comparative Example 4, as there was no solid solution formed, there was no shift of the peaks at 2Θ=27°, and the MoS$_2$ peaks at 2Θ=14.1° were observed without decrease in intensity. Furthermore, it was confirmed that Comparative Example 4 shows no shift of peaks at 2Θ=27°±2.0° (no solid solution formation) and no decrease in the intensity of MoS$_2$ peaks at 2Θ=14.5±0.5°, for example, 14.1°.

The results of the evaluation show, for example, that the composite of Example 1 has formed a solid solution, and compared to the simple mixture of Comparative Example 4, shows the presence of chemical bonds between the respective components forming the composite.

**Evaluation Example 3: Cycling Test**

The following cycling test was performed to evaluate the cycling performance of the solid secondary batteries of Examples 6 to 15, Comparative Examples 5 to 7, and Reference Examples 2 and 3, which employ the composite cathode active materials prepared in Examples 1 to 5, Comparative Examples 1 and 2, and Reference Example 1, respectively.

The cycling test was performed while the respective solid secondary battery was placed in a constant-temperature bath at 45 °C.

In the first cycle, each battery was charged at a constant current of 0.1 C for 12.5 hours until the battery voltage reached a voltage of 2.5 V to 2.8 V. Then, the battery was discharged at a constant current of 0.1 C for 12.5 hours until the battery voltage reached 0.3 V.

The discharge capacity in the first cycle was utilized as a standard capacity. The standard capacity was expressed as specific capacity of $Li_2S$ in Table 1.

After the second cycle, charge and discharge were performed up to 150 cycles under the same conditions as the first cycle. The results of the measurements are shown in Table 2 and Table 3. Table 2 concerns embodiments that the loading level was 8 mg/cm$^2$, and Table 3 concerns embodiments that the loading level was 24 mg/cm$^2$.

Initial efficiency is represented by Equation 1:

Equation 1

$$\text{Initial Efficiency [\%]} = [\text{Discharge Capacity in 1st Cycle} / \text{Charge Capacity in 1st Cycle}] \times 100$$

Cycle number refers to the number of cycles required or needed for the discharge capacity to decrease to 80 % of the standard capacity after the second cycle. The higher the cycle number, the better lifespan characteristics the battery is considered to have.

Table 2

| Item | Cathode active material | Loading level | Specific Capacity [mAh/g] | Electrode density (g/cm$^3$) | Electrode capacity (mAh/g) | Initial efficiency [%] | Lifespan (SOH80@) |
|---|---|---|---|---|---|---|---|
| Example 6 | Example 1 (30 % $Li_2S$ - 20 % LiI - 3.75 % CNF + 3.75 % $MoS_2$ + 42.5 % SE) | 8 mg/cm$^2$ | 1060 | 1.65 | 318 | 83 | 400 |
| Example 7 | Example 2 (30 % $Li_2S$ - 20 % LiI - 6.75 % CNF + 0.75 % $MoS_2$ + 42.5 % SE) | 8 mg/cm$^2$ | 820 | 1.55 | 246 | 70 | 130 |
| Example 8 | Example 3 (30 % $Li_2S$ - 20 % LiI - 0.75 % CNF + 6.75 % $MoS_2$ + 42.5 % SE) | 8 mg/cm$^2$ | 1100 | 1.7 | 330 | 87 | 630 |

(continued)

| Item | Cathode active material | Loading level | Specific Capacity [mAh/g] | Electrode density (g/cm$^3$) | Electrode capacity (mAh/g) | Initial efficiency [%] | Lifespan (SOH80@) |
|---|---|---|---|---|---|---|---|
| Example 9 | Example 4 (30 % Li$_2$S - 20 % LiI - 0.375 % MoS$_2$ supported CNF 7.5 % + 42.5 % SE) | 8 mg/cm$^2$ | 810 | 1.6 | 243 | 69 | 110 |
| Example 10 | Example 5 (30 % Li$_2$S - 20 % LiI - 3.75 % Graphene + 3.75 % MoS$_2$ + 42.5 % SE) | 8 mg/cm$^2$ | 870 | 1.62 | 261 | 75 | 200 |
| Comparative Example 5 | Comparative Example 1 (Tatsumisago) (30 % Li$_2$S -20 % LiI - 10 % CNF + 42.5 % SE) | 8 mg/cm$^2$ | 800 | 1.5 | 240 | 81 | 80 |
| Comparative Example 7 | Comparative Example 2 (30 % Li$_2$S -20 % LiI - 7.5 % CNF + 42.5 % SE) | 8 mg/cm$^2$ | 700 | 1.48 | 210 | 65 | 10 |
| Reference Example 2 | Reference Example 1 (30 % Li$_2$S - 20 % LiI - 7.5 % CNT + 42.5 % SE) | 8 mg/cm$^2$ | 780 | 1.53 | 234 | 57 | 5 |

As shown in Table 2, the solid secondary batteries of Examples 6 to 10 exhibit improvements in discharge capacity, initial efficiency, lifespan, and high-rate capability, relative to the solid secondary batteries of Comparative Examples 5 and 7, and Reference Example 2, which have employed the composite cathode active materials of Comparative Example 1, Comparative Example 2, and Reference Example 1, respectively.

Table 3

| Item | Cathode active material | Loading level | Specific Capacity (mAh/g) | Electrode density (g/cm$^3$) | Electrode capacity (mAh/q) | Initial efficiency [%] | Lifespan (SOH80@) |
|---|---|---|---|---|---|---|---|
| Example 11 | Example 1 30 % Li$_2$S - 20 % LiI - 3.75 % CNF + 3.75 % MoS$_2$ + 42.5 % SE | Thick film) 24 mg/cm2 | 1010 | 1.65 | 303 | 83 | 400 |
| Example 12 | Example 2 30 % Li$_2$S - 20 % LiI - 6.75 % CNF + 0.75 % MoS$_2$ + 42.5 % SE | Thick film) 24 mg/cm2 | 800 | 1.55 | 240 | 71 | 90 |

(continued)

| Item | Cathode active material | Loading level | Specific Capacity (mAh/g) | Electrode density (g/cm³) | Electrode capacity (mAh/q) | Initial efficiency [%] | Lifespan (SOH80@) |
|---|---|---|---|---|---|---|---|
| Example 13 | Example 3 30 % Li$_2$S - 20 % LiI - 0.75 % CNF + 6.75 % MoS$_2$ + 42.5 % SE | Thick film) 24 mg/cm2 | 1050 | 1.7 | 315 | 86 | 580 |
| Example 14 | Example 4 30 % Li$_2$S - 20 % LiI - 5 % MoS$_2$- supported CNF 7.5 % + 42.5 % SE | Thick film) 24 mg/cm2 | 790 | 1.6 | 237 | 67 | 80 |
| Example 15 | Example 5 30 % Li$_2$S - 20 % LiI - 3.75 % Gra- phene + 3.75 % MoS$_2$ + 42.5 % SE | Thick film) 24 mg/cm² | 780 | 1.62 | 234 | 72 | 150 |
| Comparative Example 6 | Comparative Ex- ample 1 (Tatsumisago) 30 % Li$_2$S - 20 % LiI - 10% CNF + 42.5 % SE | Thick film) 24 mg/cm² | 750 | 1.5 | 225 | 79 | 65 |
| Comparative Example 8 | Comparative Ex- ample 2: 30 % Li$_2$S - 20 % LiI - 7.5 % CNF + 42.5 % SE | Thick film) 24 mg/cm² | 650 | 1.48 | 195 | 64 | 8 |
| Reference Example 3 | Reference Exam- ple 1: 30 % Li$_2$S - 20 % LiI - 7.5 % CNT + 42.5 % SE | Thick film) 24 mg/cm² | 740 | 1.53 | 222 | 52 | 2 |

As shown in Table 3, it was found that the solid secondary batteries of Examples 11 to 15, each having the cathode active materials in a thick-film state, exhibit improvements in discharge capacity, initial efficiency, lifespan, and high-rate capability, relative to the solid secondary batteries of Comparative Example 6, Comparative Example 8, and Reference Example 3.

**Evaluation Example 4: Evaluation of High-Rate Capability**

The following cycling test was performed to evaluate the high-rate capability of the solid secondary batteries of Examples 6 to 15, Comparative Examples 6 to 8, and Reference Example 2, which employ the composite cathode active materials prepared in Examples 1 to 5, Comparative Examples 1 and 2, and Reference Example 1, respectively. The cycling test was performed while the solid secondary battery was placed in a constant-temperature bath at 45 °C.

Each solid secondary battery was charged at 45 °C with a constant current of 0.1 C until the battery voltage reached 4.2 V, and at a constant voltage of 4.2 V to a current value of 0.1 C. Subsequently, the battery was discharged with a constant current of 0.1 C rate until the battery voltage reached 2.5 V.

Subsequently, each battery was charged to a current value of 0.1 C with a constant current of 0.1 C and a constant voltage of 4.2 V until the battery voltage reached 4.2 V, and then was discharged with a constant current of 0.33 C until the battery voltage reached 2.5 V.

After the above charging and discharging, the batteries were evaluated for high-rate capability according to Equation 3, and some of the results thereof are shown in Table 4.

Equation 3

High-Rate Capability (%) = (Discharge Capacity at 0.33 C / Discharge Capacity at 0.1 C) X 100

Table 4

| Item | Cathode active material | Loading level | High-Rate Capability (0.33 CC/0.1C) [%] [mAh/g] |
|---|---|---|---|
| Example 6 | Example 1: 30 % $Li_2S$ - 20 % LiI - 3.75 % CNF + 3.75 % $MoS_2$ + 42.5 % SE | 8 mg/cm$^2$ | 97 |
| Example 7 | Example 2: 30 % $Li_2S$ - 20 % LiI - 6.75 % CNF + 0.75 % $MoS_2$ + 42.5 % SE | 8 mg/cm$^2$ | 96 |
| Example 8 | Example 3: 30 % $Li_2S$ - 20 % LiI - 0.75 % CNF + 6.75 % $MoS_2$ + 42.5 % SE | 8 mg/cm$^2$ | 98 |
| Example 9 | Example 4: 30 % $Li_2S$ - 20 % LiI - 0.375 % $MoS_2$-supported CNF 7.5 %+ 42.5 % SE | 8 mg/cm$^2$ | 95 |
| Example 10 | Example 5: 30 % $Li_2S$ - 20 % LiI - 3.75 % Graphene + 3.75 % $MoS_2$ + 42.5 % SE | 8 mg/cm$^2$ | 95 |
| Example 11 | Example 1: 30 % $Li_2S$ - 20 % LiI - 3.75 % CNF + 3.75 % $MoS_2$ + 42.5 % SE | Thick film) 24 mg/cm$^2$ | 95 |
| Example 12 | Example 2: 30 % $Li_2S$ - 20 % LiI - 6.75 % CNF + 0.75 % $MoS_2$ + 42.5 % SE | Thick film) 24 mg/cm$^2$ | 94 |
| Example 13 | Example 3: 30 % $Li_2S$ - 20 % LiI - 0.75 % CNF + 6.75 % $MoS_2$ + 42.5 % SE | Thick film) 24 mg/cm$^2$ | 96 |
| Example 14 | Example 4: 30 % $Li_2S$ - 20 % LiI - 5 % $MoS_2$ supported CNF 7.5 %+ 42.5 % SE | Thick film) 24 mg/cm$^2$ | 94 |
| Example 15 | Example 5: 30 % $Li_2S$ - 20 % LiI - 3.75 % Graphene + 3.75 % $MoS_2$ + 42.5 % SE | Thick film) 24 mg/cm$^2$ | 94 |
| Comparative Example 5 | Comparative Example 1 (Tatsumi-sago) 30 % $Li_2S$ -20% LiI - 10% CNF + 42.5 % SE | 8 mg/cm$^2$ | 89 |
| Comparative Example 6 | Comparative Example 1 (Tatsumi-sago) 30 % $Li_2S$ -20% LiI - 10% CNF + 42.5 % SE | Thick film) 24 mg/cm$^2$ | 85 |
| Comparative Example 7 | Comparative Example 2: 30 % $Li_2S$ - 20 % LiI - 7.5 % CNF + 42.5 % SE | 8 mg/cm$^2$ | 84 |

(continued)

| Item | Cathode active material | Loading level | High-Rate Capability (0.33 CC/0.1C) [%] [mAh/g] |
|---|---|---|---|
| Comparative Example 8 | Comparative Example 2: 30 % $Li_2S$ - 20 % LiI - 7.5 % CNF + 42.5 % SE | Thick film) 24 mg/cm$^2$ | 81 |
| Reference Example 2 | Reference Example 1: 30 % $Li_2S$ - 20 % LiI - 7.5 % CNT + 42.5 % SE | 8 mg/cm$^2$ | 72 |
| Reference Example 3 | Reference Example 1: 30 % $Li_2S$ - 20 % LiI 7.5 % CNT + 42.5 % SE | Thick film) 24 mg/cm$^2$ | 65 |

As shown in Table 4, it was found that the solid secondary batteries of Examples 6 to 15 have improved high-rate capability compared to the solid secondary batteries of Comparative Examples 5 to 8 and Reference Examples 2 and 3.

According to one or more embodiments, by utilizing a composite utilizing an inorganic electronically-conductive structure, a cathode with an improved electron conduction network may be provided, and a solid secondary battery including the cathode may have improved volumetric energy density as well as improved initial efficiency and high-rate capability.

A battery management system (BMS) device, and/or any other relevant devices or components according to embodiments of the present disclosure described herein may be implemented utilizing any suitable hardware, firmware (e.g., an application-specific integrated circuit), software, or a combination of software, firmware, and hardware. For example, the various components of the device may be formed on one integrated circuit (IC) chip or on separate IC chips. Further, the various components of the device may be implemented on a flexible printed circuit film, a tape carrier package (TCP), a printed circuit board (PCB), or formed on one substrate. Further, the various components of the device may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, or the like. Also, a person of skill in the art should recognize that the functionality of various computing devices may be combined or integrated into a single computing device, or the functionality of a particular computing device may be distributed across one or more other computing devices without departing from the scope of the present disclosure.

It should be understood that embodiments described herein should be considered in a descriptive sense only and not for purposes of limitation. Descriptions of features or aspects within each embodiment should typically be considered as available for other similar features or aspects in other embodiments. While one or more embodiments have been described with reference to the drawings, it will be understood by those of ordinary skill in the art that one or more suitable changes in form and details may be made therein without departing from the spirit and scope of the present disclosure as defined by the following claims and equivalents thereof.

**Claims**

1. A solid secondary battery (1) comprising:

   a cathode layer (10);
   an anode layer (20); and
   a solid electrolyte layer (30) between the cathode layer (10) and the anode layer (20),
   wherein the cathode layer (10) comprises:

      a cathode current collector (11); and
      a cathode active material layer (12) on at least one side of the cathode current collector (11),

   wherein the cathode active material layer (12) comprises a composite cathode active material,
   wherein the composite cathode active material comprises a composite of i) $M_2S$, M being Li or Na, ii) an alkali metal salt, iii) an inorganic electronically-conductive structure, and iv) a two-dimensional carbonaceous structure and/or a fibrous carbonaceous material, the fibrous carbonaceous material having an aspect ratio of 2 or more, ,
   wherein the inorganic electronically-conductive structure has an electronic conductivity of $10^{-3}$ S/cm or more,

wherein the composite comprises a solid solution of the $M_2S$ and the alkali metal salt, and
wherein the two-dimensional carbonaceous structure is graphene, graphene oxide, or a combination thereof.

2. The solid secondary battery (1) as claimed in claim 1,

wherein the fibrous carbonaceous material has a length of 1 $\mu$m to 50 $\mu$m, and a diameter of 10 nm to 10 $\mu$m,
wherein the fibrous carbonaceous material has a rod structure, a tube structure, a needle structure, a wire structure, or a combination thereof,
wherein a cross-section of the fibrous carbonaceous material, crossing a length direction thereof, has an irregular shape, a circular shape, or a polygonal shape, and
wherein the fibrous carbonaceous material comprises carbon nanofibers.

3. The solid secondary battery (1) as claimed in claim 1 or 2,

wherein an amount of the inorganic electronically-conductive structure in the composite is in a range of 1 part by weight to 20 parts by weight, with respect to 100 parts by weight of the composite, and
an amount of the fibrous carbonaceous material and/or the two-dimensional carbonaceous structure is in a range of 1 part by weight to 40 parts by weight, with respect to 100 parts by weight of the composite, and
wherein a molar ratio of the $M_2S$ to the alkali metal salt is 50:50 to 95:5.

4. The solid secondary battery (1) as claimed in any of the claims 1 to 3,

wherein a size of the $M_2S$ is identical to or smaller than a size of the alkali metal salt, and a size of the inorganic electronically-conductive structure is larger than a size of lithium sulfide and the alkali metal salt, and
wherein the particle sizes of the inorganic electronically-conductive structure, the alkali metal salt, and the $M_2S$ gradually decrease in order of: the inorganic electronically-conductive structure, the alkali metal salt, and the $M_2S$.

5. The solid secondary battery (1) as claimed in any of the claims 1 to 4,

wherein the inorganic electronically-conductive structure has an average length of 1 $\mu$m to 50 $\mu$m, and an average thickness of 0.01 $\mu$m to 10 $\mu$m, and the $M_2S$ has an average particle size of 0.1 nm to 10 $\mu$m,
wherein the alkali metal salt has a size of 1 nm to 10 $\mu$m, and
wherein the composite has a particle size of 10 $\mu$m or less.
And/or
wherein the inorganic electronically-conductive structure has a one-dimensional structure form or a two-dimensional structure form,
wherein the inorganic electronically-conductive structure comprises a transition metal sulfide, a metal sulfide comprising at least one metal selected from among elements in Groups 3 to 5 of the Periodic Table or a combination thereof,
wherein the inorganic electronically-conductive structure comprises titanium, vanadium, chromium, manganese, iron, cobalt, nickel, copper, zinc, niobium, tantalum, molybdenum, tungsten, or a combination thereof, and
wherein the inorganic electronically-conductive structure is:

at least one metal oxide selected from among $VO_2$, $ReO_2$, $CrO_2$, $ReO_2$, $VO_2$, $SnO_2$, $TiO_2$, $ZrO_2$, $Al_2O_3$, $TeN$, $TiN$, $TiO$, $TiO_x$ (0.75<x<1.45), $Ti_nO_{2n-1}$ (4<n<10), $ReO_3$, $CrO_2$, and $VO_2$;
at least one metal sulfide selected from among $ZrS_2$, $FeS$, $FeS_2$, $CuS$, $Cu_2S$, $CuS_2$, $Cu_9S_8$, $Cu_7S_4$, $CoS$, $CoS_2$, $Co_3S_4$, $Co_9S_8$, $NiS$, $NiS_2$, $Ni_9S_8$, $Ni_3S_2$, $VS$, $VS_2$, $V_2S_3$, $V_2S_5$, $VS_4$, $NbS_2$, $NbS_3$, $NbS_4$, $NbS_5$, $Nb_2S_3$, $Nb_2S_5$ $TaS_2$, $TaS_3$, $TaS_4$, $TaS_5$, $Ta_2S_3$, $Ta_2S_5$, $Cr_2S_3$, $CrS_3$, $MoS_2$, $MoS_3$, $MoS_4$, $WS_2$, $WS_3$, $WS_4$, $WS_5$, $MnS$, $Mn_2S_3$, $TiS_2$, $NiNb_3S_6$, $Cu_2MoS_4$, and $Cu_4Mo_6S_8$; or
a combination thereof;
and/or

wherein the alkali metal salt is a lithium salt or a sodium salt, and
the alkali metal salt is a binary compound or a ternary compound,
wherein the binary compound comprises: $LiI$, $LiBr$, $LiCl$, $LiF$, $LiH$, $Li_2O$, $Li_2Se$, $Li_2Te$, $Li_3N$, $Li_3P$, $Li_3As$, $Li_3Sb$, $Li_3Al_2$, $LiB_3$, or a combination thereof; or
$NaI$, $NaBr$, $NaCl$, $NaF$, $Na_2O$, $Na_2Se$, $Na_3N$, $Na_3P$, $Na_3As$, $Na_3Sb$, $Na_3Al_2$, $NaB_3$ or a combination thereof, and

wherein the ternary compound comprises: $Li_3OCl$, $LiPF_6$, $LiBF_4$, $LiSbF_6$, $LiAsF_6$, $LiClO_4$, $LiAlO_2$, $LiAlCl_4$, $LiNO_3$, $Li_2CO_3$, $LiBH_4$, $Li_2SO_4$, $Li_3BO_3$, $Li_3PO_4$, $Li_4NCl$, $Li_5NCl_2$, $Li_3BN_2$, or a combination thereof; or $Na_3OCl$, $NaBF_4$, $NaPF_6$, $NaAsF_6$, $NaClO_4$, $NaNO_3$, $NaAlO_2$, $NaAlCl_4$, $NaNO_3$, $Na_2CO_3$, $NaBH_4$, $Na_2SO_4$, $Na_3BO_3$, $Na_3PO_4$, $Na_4NCl$, $Na_5NCl_2$, $Na_3BN_2$, or a combination thereof.

6. The solid secondary battery (1) as claimed in any of the claims 1 to 5,

   wherein on an X-ray diffraction (XRD) spectrum of the composite cathode active material, a first diffraction angle of each of a first peak appearing at a diffraction angle of $2\theta = 14.5 \pm 0.5°$, a second peak appearing at a diffraction angle of $2\theta = 32.5 \pm 0.5°$, and a third peak appearing at a diffraction angle of $2\theta = 58.5 \pm 0.5°$ of the composite cathode active material, is smaller than a second diffraction angle of each of a fourth peak appearing at a diffraction angle of $2\theta = 14.5 \pm 0.5°$, a fifth peak appearing at a diffraction angle of $2\theta = 32.5 \pm 0.5°$, and a sixth peak appearing at a diffraction angle of $2\theta = 58.5 \pm 0.5°$ on an XRD spectrum of the $MoS_2$ used to prepare the composite, wherein the first peak appearing at a diffraction angle of $2\theta = 14.5 \pm 0.5°$ has a decreased intensity relative to an intensity of the fourth peak appearing at a diffraction angle of $2\theta = 14.5 \pm 0.5°$ on the XRD spectrum of the $MoS_2$ used to prepare the composite.

7. The solid secondary battery (1) as claimed in any of the claims 1 to 6,

   wherein a first lattice constant d1 derived from a first peak appearing at a diffraction angle of $2\theta = 27° \pm 2.0°$, corresponding to the (111) crystal plane of $M_2S$, on the XRD spectrum of the composite, is larger than a second lattice constant d2 derived from a second peak appearing at a diffraction angle of $2\theta = 27° \pm 2.0°$, corresponding to the (111) crystal plane of $M_2S$ on the XRD spectrum of the $M_2S$ used in the preparation of the composite, and wherein a size of the first lattice constant d1 is 5.78 Å or more.

8. The solid secondary battery (1) as claimed in any of the claims 1 to 7, wherein the composite cathode active material has a structure in which iii) the inorganic electronically-conductive structure is supported on iv) the fibrous carbonaceous material having an aspect ratio of 2 or more.

9. The solid secondary battery (1) as claimed in any of the claims 1 to 8,

   wherein the cathode active material layer (12) further comprises a solid electrolyte, and wherein the solid electrolyte comprises a sulfide-based solid electrolyte, an oxide-based solid electrolyte, a polymer solid electrolyte, or a combination thereof, wherein an amount of the solid electrolyte is 10 parts by weight to 60 parts by weight with respect to 100 parts by weight of the cathode active material layer (12).

10. The solid secondary battery (1) as claimed in any of the claims 1 to 9,

    wherein the anode layer (20) comprises an anode current collector (21) and a first anode active material layer (22) on the anode current collector (21).
    And/or
    the anode layer (20) comprises an anode current collector (21) and a lithium host layer (22) on a side of the anode current collector (21),
    wherein the lithium host layer (22) comprises a lithium host structure,
    wherein the lithium host structure comprises at least one lithium host, the at least one lithium host comprising a carbon-based lithium host, a metal-based lithium host, a polymer-based lithium host, or a combination thereof, and
    wherein the solid secondary battery (1) further comprises a first inactive member (40, 42) on the anode layer (20); and/or
    the anode layer (20) comprises an anode current collector (21),
    wherein at least one of the cathode current collector (11) or the anode current collector (21) comprises a base film and a metal layer on at least one side of the base film,
    wherein the base film comprises a polymer, wherein the polymer comprises polyethylene terephthalate (PET), polyethylene (PE), polypropylene (PP), polybutylene terephthalate (PBT), polyimide (PI), or a combination thereof, and
    wherein the metal layer comprises indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof.

**11.** The solid secondary battery (1) as claimed in any of the claims 1 to 10,

wherein an anode active material of the first anode active material layer (22) comprises at least one of a carbonaceous anode active material or a metal-based anode active material,
wherein the carbonaceous anode active material comprises amorphous carbon, crystalline carbon, porous carbon, or a combination thereof, and
the metal-based anode active material comprises gold (Au), platinum (Pt), palladium (Pd), silicon (Si), silver (Ag), aluminum (Al), bismuth (Bi), tin (Sn), zinc (Zn), or a combination thereof.
and/or
wherein an anode active material of the first anode active material layer (22) comprises a mixture of a metal-based anode active material and a carbonaceous material, a metal-based anode active material being supported on a carbonaceous material, or a combination thereof.

**12.** The solid secondary battery (1) as claimed in any of the claims 1 to 11,

further comprising a second anode active material layer (24) between the anode current collector (21) and the first anode active material layer (22),
wherein the second anode active material layer (24) is a metal layer comprising lithium and/or a lithium alloy, and
wherein the second anode active material layer (24) is a plated layer, and a thickness of the first anode active material layer (22) is greater than a thickness of the second anode active material layer (24).

**13.** The solid secondary battery (1) as claimed in any of the claims 1 to 12, wherein the solid secondary battery (1)

further comprises an inactive member on a side of the cathode layer (10) or the anode layer (20), or
does not comprise the inactive elastic member.

**14.** The solid secondary battery (1) as claimed in any of the claims 1 to 13,

wherein the solid electrolyte layer comprises a solid electrolyte, a gel electrolyte, or a combination thereof,
wherein the solid electrolyte comprises a sulfide-based solid electrolyte, an oxide-based solid electrolyte, a polymer solid electrolyte, or a combination thereof, and
wherein the gel electrolyte comprises a polymer gel electrolyte.

**15.** A method of preparing the solid secondary battery (1) as claimed in any of the claims 1 to 14, the method comprising:

performing first milling on a composition comprising $M_2S$, an alkali metal salt, and an inorganic electronically-conductive structure;
obtaining a composite by adding a composition comprising a fibrous carbonaceous material having an aspect ratio of 2 or more or a two-dimensional carbonaceous structure to a product of the first milling, and performing second milling;
preparing a composition by adding a binder to the composite and then mixing the same, and preparing a cathode by using the composition;
preparing an anode; and
applying a solid electrolyte between the cathode and the anode.

# FIG. 1

# FIG. 2

# FIG. 3

# FIG. 4

# FIG. 5

# FIG. 6

# FIG. 7

**Europäisches Patentamt**
**European Patent Office**
**Office européen des brevets**

# EUROPEAN SEARCH REPORT

**Application Number**

EP 24 15 6680

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2017/317337 A1 (HAYASHI AKITOSHI [JP] ET AL) 2 November 2017 (2017-11-02) | 1-5,8-15 | INV.<br>H01M4/04 |
| A | * claims 1-9 *<br>* paragraphs [0043] - [0046] *<br>* paragraphs [0066] - [0069] * | 6,7 | H01M4/136<br>H01M4/36<br>H01M4/58<br>H01M4/62 |
| X | EP 3 840 090 A1 (INST PHYSICS CAS [CN]) 23 June 2021 (2021-06-23) | 1-5,8-15 | H01M10/0525<br>H01M10/0562 |
| A | * claims 1-10 * | 6,7 | |
| A | CN 109 509 872 B (UNIV CENTRAL SOUTH) 1 January 2021 (2021-01-01)<br>* example 5 * | 1-15 | ADD.<br>H01M4/02 |

**TECHNICAL FIELDS SEARCHED (IPC)**

H01M

The present search report has been drawn up for all claims

| Place of search | Date of completion of the search | Examiner |
|---|---|---|
| Munich | 13 August 2024 | Haering, Christian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

......................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 15 6680

This annex lists the patent family members relating to the patent documents cited in the above-mentioned European search report.
The members are as contained in the European Patent Office EDP file on
The European Patent Office is in no way liable for these particulars which are merely given for the purpose of information.

13-08-2024

| Patent document cited in search report | Publication date | Patent family member(s) | Publication date |
|---|---|---|---|
| US 2017317337 A1 | 02-11-2017 | CN 107078295 A | 18-08-2017 |
| | | JP 6529508 B2 | 12-06-2019 |
| | | JP WO2016063877 A1 | 31-08-2017 |
| | | KR 20170068448 A | 19-06-2017 |
| | | US 2017317337 A1 | 02-11-2017 |
| | | WO 2016063877 A1 | 28-04-2016 |
| EP 3840090 A1 | 23-06-2021 | CN 110838577 A | 25-02-2020 |
| | | EP 3840090 A1 | 23-06-2021 |
| | | JP 2021534554 A | 09-12-2021 |
| | | KR 20210042124 A | 16-04-2021 |
| | | US 2021175494 A1 | 10-06-2021 |
| | | WO 2020034875 A1 | 20-02-2020 |
| CN 109509872 B | 01-01-2021 | NONE | |

For more details about this annex : see Official Journal of the European Patent Office, No. 12/82

EPO FORM P0459

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020230107862

**Non-patent literature cited in the description**

- *Electrochimica Acta*, 2017, vol. 254, 172-180

- *Applied Surface Science*, 2021, vol. 564, 150387